# EUROPEAN PATENT APPLICATION

(11) **EP 3 995 012 A1**
(43) Date of publication of application: **11.05.2022**
(21) Application number: 19935984.5
(22) Date of filing: 16.09.2019
(51) Int. Cl.: A24F 47/00

(54) **ATOMIZATION DEVICE**

(30) Priority: 03.07.2019 CN 201910601402; 03.07.2019 CN 201910596521
(71) Applicant: Shenzhen Relx Technology Co., Ltd., Shenzhen City, Guangdong Province 518108 (CN)
(72) Inventor: FU, Yao, Shenzhen, Guangdong 518055 (CN); ZHANG, Jin, Shenzhen, Guangdong 518055 (CN); YANG, Zugang, Shenzhen, Guangdong 518055 (CN); FENG, Shuting, Shenzhen, Guangdong 518055 (CN); TAO, Xingming, Shenzhen, Guangdong 518055 (CN); PENG, Xun, Shenzhen, Guangdong 518055 (CN)
(74) Representative: Klunker IP Patentanwälte PartG mbB
(86) International application number: PCT/CN2019/106024
(87) International publication number: WO 2021/000425

(57) **Abstract**

The present application relates to a vaporization device. The proposed vaporization device includes: a heating component; a first conductive component configured to be electrically connected to the heating component; a second conductive component configured to be electrically connected to the heating component; a power supply component configured to output a power to the heating component; an output detecting circuit configured to provide a first detection signal associated with a first resistance value between the first conductive component and the second conductive component; and a controller electrically connected to the output detecting circuit and the power supply component, where when determining that the first detection signal meets a first condition, the controller controls the power supply component to stop outputting the power to the heating component.

## Description

### 1. Field of the Invention

The present invention generally relates to an electronic device, and in particular, to a vaporization device for providing inhalable aerosol.

### 2. Description of the Related Art

An electronic cigarette is an electronic product that heats a volatile solution and vaporizes the solution to generate aerosol for a user to inhale. In recent years, major manufacturers begin to produce various electronic cigarette products. Generally, an electronic cigarette product includes a housing, an e-liquid storage chamber, a vaporization chamber, a heating component, an air inlet, an airflow channel, an air outlet, a power supply device, a sensing device, and a control device. The e-liquid storage chamber is configured to store a volatile solution, and the heating component is configured to heat and vaporize the volatile solution to generate aerosol. The air inlet is in communication with the vaporization chamber, and air is supplied to the heating component when a user inhales. The aerosol generated by the heating component is first generated in the vaporization chamber, then flows through the airflow channel and the air outlet, and is finally inhaled by the user. The power supply device supplies power required by the heating component, and the control device controls a heating time of the heating component based on an inhalation action of the user detected by the sensing device. The housing wraps each of the foregoing components.

The existing electronic cigarette products have different defects. For example, for the electronic cigarette products in the prior art, in order to reduce the number of components, poor component yield may be caused. For the electronic cigarette products in the prior art, in order to reduce the number of components, the costs of manufacturing the component may be increased. In addition, without considering the high temperature problem of the aerosol, the electronic cigarette products in the prior art may cause the potential crisis of user burns.

In addition, an existing electronic cigarette product does not control power output of a heating component. When a user inhales for a long time, a power supply device continuously heats the heating component. The heating component may overheat and generate a scorching smell, which results in bad experience for the user. The overheated heating component may also cause an internal member of the electronic cigarette to be tarnished or even burned. Existing electronic cigarette products without control on power output generally consume power energy quickly.

Therefore, the present disclosure proposes a vaporization device that can resolve the foregoing problem.

### SUMMARY OF THE INVENTION

A vaporization device is proposed. The vaporization device includes: a heating component; a first conductive component configured to be electrically connected to the heating component; a second conductive component configured to be electrically connected to the heating component; a power supply component configured to output a power to the heating component; an output detecting circuit configured to provide a first detection signal associated with a first resistance value between the first conductive component and the second conductive component; and a controller electrically connected to the output detecting circuit and the power supply component, where when determining that the first detection signal meets a first condition, the controller controls the power supply component to stop outputting the power to the heating component.

A vaporization device is proposed. The vaporization device includes: a heating component; a heating line winding a part of the heating component; a power supply component configured to output a power to the heating line; an output detecting circuit configured to provide a first detection signal associated with a resistance value of the heating line; and a controller electrically connected to the output detecting circuit and the power supply component, where when determining that the first detection signal meets a first condition, the controller stops providing an enable signal to the output detecting circuit.

### BRIEF DESCRIPTION OF THE DRAWINGS

Aspects of some embodiments of the present disclosure are readily understood from the following detailed description when read with the accompanying figures. It is noted that various structures may not be drawn to scale, and dimensions of the various structures may be arbitrarily increased or reduced for clarity of discussion.
FIG. 1 is a schematic diagram of a vaporization device according to some embodiments of the present invention.
FIG. 2A and FIG. 2B are each an exploded view of a part of a vaporization device according to some embodiments of the present invention.
FIG. 3A and FIG. 3B are each an exploded view of a part of a vaporization device according to some embodiments of the present invention.
FIG. 4A and FIG. 4B are each a sectional view of a cartridge according to some embodiments of the present invention.
FIG. 5 is a circuit block diagram according to some embodiments of the present invention.
FIG. 6 is a schematic circuit diagram of a controller according to some embodiments of the present invention.
FIG. 7 is a schematic circuit diagram of an output detecting circuit according to some embodiments of the present invention.
FIG. 8A is a schematic circuit diagram of a temperature detecting circuit according to some embodiments of the present invention.
FIG. 8B is a schematic circuit diagram of a charge detecting circuit according to some embodiments of the present invention.
FIG. 9 is a schematic circuit diagram of a vibrator according to some embodiments of the present invention.
FIG. 10 is a schematic circuit diagram of a sensor according to some embodiments of the present invention.
FIG. 11 is a schematic circuit diagram of a light-emitting component according to some embodiments of the present invention.
FIG. 12 is a schematic circuit diagram of a charge protecting circuit according to some embodiments of the present invention.
FIG. 13 is a schematic circuit diagram of a charge management circuit according to some embodiments of the present invention.
FIG. 14 is a schematic circuit diagram of a power supply component protecting circuit according to some embodiments of the present invention.
FIG. 15 is a schematic circuit diagram of a charging component according to some embodiments of the present invention.

Common reference numerals are used throughout the drawings and the detailed description to indicate the same or similar components. Characteristics of the present invention become more apparent from the following detailed description taken in conjunction with the accompanying drawings.

### PREFERRED EMBODIMENT OF THE PRESENT INVENTION

The following disclosure provides many different embodiments, or examples, for implementing different features of the provided subject matter. Specific examples of components and arrangements are described below. These are, of course, merely examples and are not intended to be limiting. In the present invention, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Embodiments of the present invention are discussed in detail below. It should be understood, however, that the present invention provides many applicable concepts that may be implemented in a wide variety of specific contexts. The specific embodiments discussed are merely illustrative and do not limit the scope of the present invention.

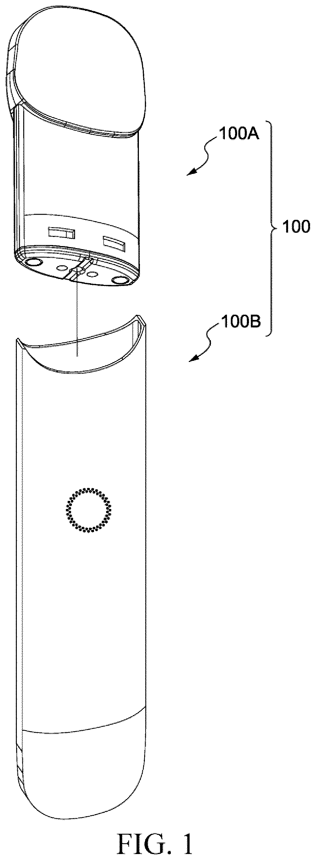

FIG. 1 is a schematic diagram of a vaporization device according to some embodiments of the present invention.

A vaporization device 100 may include a cartridge 100A and a body 100B. In some embodiments, the cartridge 100A and the body 100B may be designed as a whole. In some embodiments, the cartridge 100A and the body 100B may be designed as two separate components. In some embodiments, the cartridge 100A may be designed to be removably engaged with the body 100B. In some embodiments, when the cartridge 100A and the body 100B are combined, a part of the cartridge 100A is received in the body 100B.

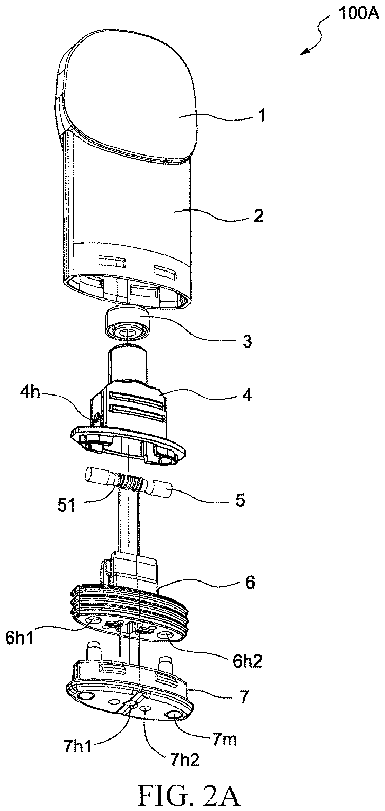

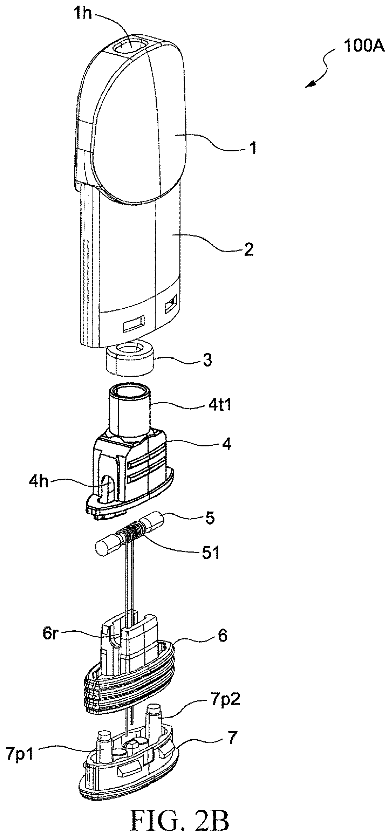

FIG. 2A and FIG. 2B are each an exploded view of a part of a vaporization device according to some embodiments of the present invention.

A cartridge 100A includes a mouthpiece cap 1, a cartridge housing 2, a seal member 3, a heating component top cap 4, a heating component 5, a heating component base 6, and a cartridge base 7.

In some embodiments, the mouthpiece cover 1 and the cartridge casing 2 may be two separate components. In some embodiments, the mouthpiece cover 1 and the cartridge casing 2 may be integrally formed. The mouthpiece cover 1 has a hole 1h. The hole 1h forms a part of an aerosol passage. Aerosol generated by the vaporization device 100 may be inhaled by a user through the hole 1h.

The seal member 3 may be sleeved on a tube 4t1 of the heating component top cap 4. The seal member 3 has a similar shape as the tube 4t1 of the heating component top cap 4. In some embodiments, the seal member 3 has an annular shape. In some embodiments, the seal member 3 may have other shapes. The seal member 3 may have flexibility. The seal member 3 may have ductility. In some embodiments, the material of the seal member 3 may include silica gel.

In some embodiments, the sealing component 3 may have a hardness between 20 and 40. In some embodiments, the sealing component 3 may have a hardness between 40 and 60. In some embodiments, the sealing component 3 may have a hardness between 60 and 75. A hardness unit used herein is Shore Hardness A (HA)

One side of the heating component top cap 4 has a hole 4h. The other side of the heating component top cap 4 also has a hole. The heating component top cap 4 may include plastic materials. In some embodiments, the heating component top cap 4 may include materials such as polypropylene (PP), high pressure polyethylene (LDPE), and high density polyethylene (HDPE). In some embodiments, the material of the heating component top cap 4 may include silica gel.

The heating component top cover 4 and the sealing component 3 may be made of a same material. The heating component top cover 4 and the sealing component 3 may be made of different materials. The heating component top cover 4 and the sealing component 3 may include different materials. In some embodiments, the heating component top cover 4 may have a hardness greater than the hardness of the sealing component 3. In some embodiments, the heating component top cover 4 may have a hardness between 65 and 75. In some embodiments, the heating component top cover 4 may have a hardness between 75 and 85. In some embodiments, the heating component top cover 4 may have a hardness between 85 and 90.

Both ends of the heating component 5 may extend beyond the hole 4h. Both ends of the heating component 5 may be exposed from the hole 4h.

In some embodiments, the material of the heating component 5 may include cotton core. In some embodiments, the material of the heating component 5 may include non-woven fabrics. In some embodiments, the material of the heating component 5 may include ceramics. In some embodiments, the heating component 5 may include a composition of cotton core, non-woven fabrics or ceramics.

The heating component 5 includes a heating wire 51. The heating wire 51 may be wound around a part of the heating component 5. The heating wire 51 may be wound around a central part of the heating component 5. The heating wire 51 is supplied with power, so that the vaporization device 100 may raise the temperature of the heating component 5.

The heating wire 51 may include the metallic material. In some embodiments, the heating wire 51 may include silver. In some embodiments, the heating wire 51 may include platinum. In some embodiments, the heating wire 51 may include palladium. In some embodiments, the heating wire 51 may include nickel. In some embodiments, the heating wire 51 may include the nickel alloy material.

The heating component base 6 includes a groove 6r. The heating component 5 may be disposed on the groove 6r. The heating component 5 may be supported by the groove 6r. The heating component 5 may be fixed between the heating component top cap 4 and the groove 6r. The heating component base 6 includes holes 6h1 and 6h2. The holes 6h1 and 6h2 extend into the heating component base 6. The holes 6h1 and 6h2 penetrate the heating component base 6.

The cartridge base 7 includes pillar structures 7p1 and 7p2. The pillar structure 7p1 may extend into the hole 6h1. The pillar structure 7p1 may be mechanically coupled to the hole 6h1. The pillar structure 7p2 may extend into the hole 6h2. The pillar structure 7p2 may be mechanically coupled to the hole 6h2. The cartridge base 7 may be fixed to the heating component base 6 through the pillar structures 7p1 and 7p2. The cartridge base 7 includes a hole 7h1 and a hole 7h2. The hole 7h1 forms a part of an aerosol channel. The heating wire 51 extends through the hole 7h2 to form an electrical connection with a conductive component 11 disposed in the body 100B. The cartridge base 7 includes an adsorption component 7m. The adsorption component 7m may include the metallic material. The adsorption component 7m may be magnetically coupled to a magnetic component 12 disposed in the body 100B. The adsorption component 7m may be removably coupled to a magnetic component 12 disposed in the body 100B.

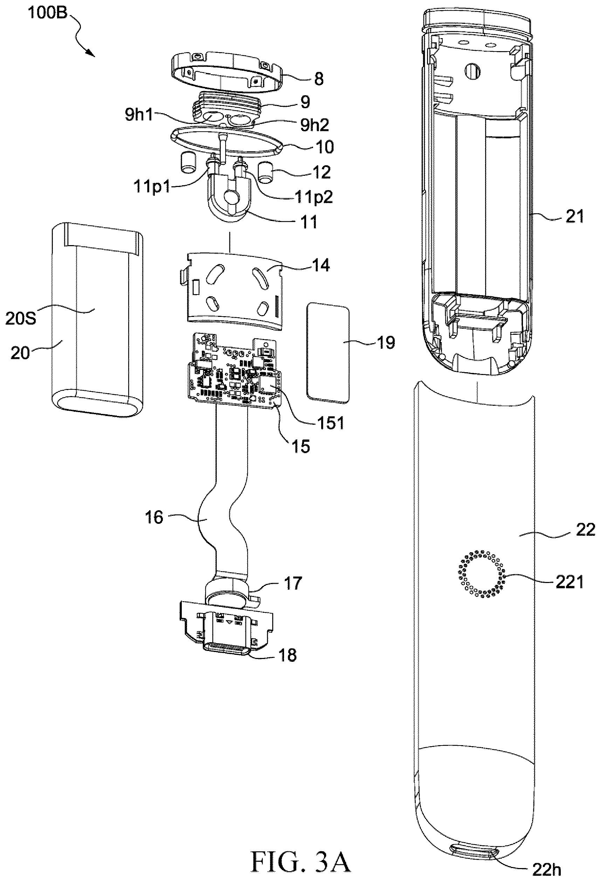

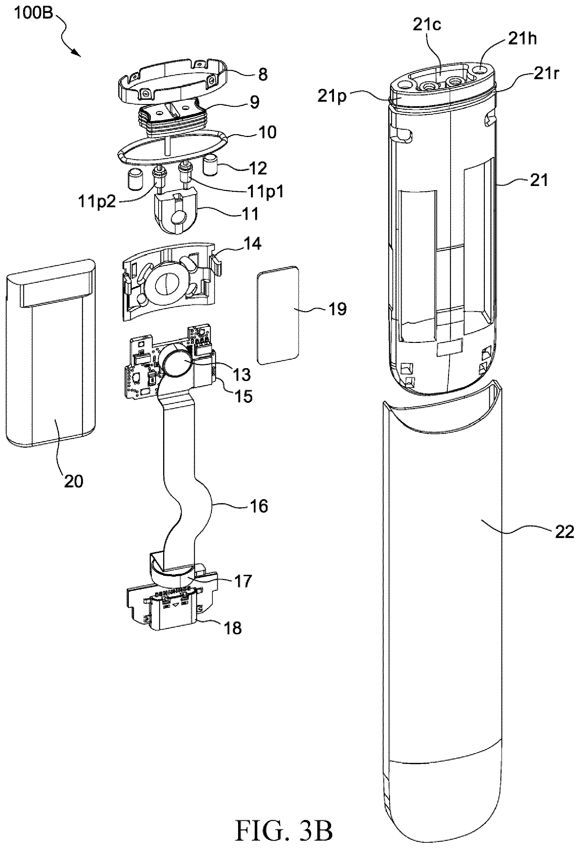

FIG. 3A and FIG. 3B are each an exploded view of a part of a vaporization device according to some embodiments of the present invention.

The body 100B includes a frame 8, a sensor upper cap 9, a seal member 10, a conductive component 11, a magnetic component 12, a sensor 13, a circuit board bracket 14, a circuit board 15, a flat cable 16, a vibrator 17, a charging component 18, a buffer component 19, a power supply component 20, a power supply component bracket 21, and a body housing 22.

The frame 8 is fixed to an upper periphery 21p of the power supply component bracket 21. In some embodiments, the frame 8 may include the plastic material. In some embodiments, the frame 8 may include the metal material. The sensor upper cap 9 is disposed in a cavity 21c of the power supply component bracket 21. The seal member 10 is disposed in a groove 21r of the power supply component bracket 21. The magnetic component 12 is disposed in a hole 21h of the power supply component bracket 21. In some embodiments, the magnetic component 12 may be a permanent magnet. In some embodiments, the magnetic component 12 may be an electromagnet. In some embodiments, the magnetic component 12 is magnetic. In some embodiments, the magnetic component 12 is magnetic only after being electrified.

The sensor upper cap 9 has holes 9h1 and 9h2. The hole 9h1 may accommodate the conductive component 11. The hole 9h2 is in fluid communication with the sensor 13. The sensor 13 may detect airflow generation through the hole 9h2. The sensor 13 may detect pressure change through the hole 9h2. The sensor 13 may detect sound waves through the hole 9h2.

The conductive component 11 includes a conductive pin 11p1 and a conductive pin 11p2. The conductive pin 11p1 and the conductive pin 11p2 may be electrically connected to the heating component 5. The conductive pin 11p1 and the conductive pin 11p2 may be electrically connected to a heating line 51.

The circuit board 15 is disposed between the circuit board bracket 14 and the power supply component bracket 21. The circuit board 15 includes a controller 151.

The controller 151 may be a microprocessor. The controller 151 may be a programmable integrated circuit. The controller 151 may be a programmable logic circuit. In some embodiments, operation logic in the controller 151 cannot be changed after the controller 151 is manufactured. In some embodiments, the operation logic in the controller 151 may be changed programmatically after the controller 151 is manufactured.

The circuit board 15 may also include a memory (not shown). In some embodiments, the memory may be integrated into the controller 151. In some embodiments, the memory may be disposed separately from the controller 151.

The controller 151 may be electrically connected to the sensor 13. The controller 151 may be electrically connected to the conductive component 11. The controller 151 may be electrically connected to the power supply component 20. When the sensor 13 detects an airflow, the controller 151 may control the power supply component 20 to output a power to the conductive component 11. When the sensor 13 detects an air pressure change, the controller 151 may control the power supply component 20 to output a power to the conductive component 11. When the sensor 13 detects a negative pressure, the controller 151 may control the power supply component 20 to output a power to the conductive component 11. When the controller 151 determines that an air pressure detected by the sensor 13 is less than a threshold, the controller 151 may control the power supply component 20 to output a power to the conductive component 11. When the sensor 13 detects a sound wave, the controller 151 may control the power supply component 20 to output a power to the conductive component 11. When the controller 151 determines that the sound wave detected by the sensor 13 has an amplitude greater than a threshold, the controller 151 may control the power supply component 20 to output a power to the conductive component 11.

The vibrator 17 may be electrically connected to the controller 151. In some embodiments, the vibrator 17 is electrically connected to the controller 151 on the circuit board 15 via the flat cable 16.

Based on different operating states of a vaporization device 100, the controller 151 may control the vibrator 17 to generate different somatosensory effects. In some embodiments, when the user inhales for more than a specific period of time, the controller 151 may control the vibrator 17 to generate vibration to remind the user to stop inhaling. In some embodiments, when the user charges the vaporization device 100, the controller 151 may control the vibrator 17 to generate vibration to indicate that the charging already starts. In some embodiments, when the charging of the vaporization device 100 is completed, the controller 151 may control the vibrator 17 to generate vibration to indicate that the charging is completed.

The charging component 18 is disposed on a bottom of the body housing 22. One end of the charging component 18 is exposed via a through hole 22h of the body housing 22. The power supply component 20 may be charged via the charging component 18. In some embodiments, the charging component 18 includes a USB interface. In some embodiments, the charging component 18 includes a USB type-C interface.

The power supply component 20 may be disposed in the power supply component bracket 21. The buffer component 19 may be disposed on a surface 20s of the power supply component 20. The buffer component 19 may be disposed between the power supply component 20 and the body housing 22. The buffer component 19 may be in direct contact with the surface 20s of the power supply component 20 and an inner wall of the body housing 22. Although not shown in the figure, an additional buffer component may be disposed between the power supply component 20 and the power supply component bracket 21.

In some embodiments, the power supply component 20 may be a battery. In some embodiments, the power supply component 20 may be a rechargeable battery. In some embodiments, the power supply component 20 may be a disposable battery.

The body casing 22 includes a light-transmissive component 221. The light-transmissive component 221 may include one or more holes penetrating the body casing 22. In some embodiments, the light-transmissive component 221 may be generally circular. In some embodiments, the light-transmissive component 221 may be generally rectangular. In some embodiments, the light-transmissive component 221 may have a symmetrical appearance. In some embodiments, the light-transmissive component 221 may have an asymmetric shape. Light emitted by the one or more light-emitting components 157 on the circuit board 15 is visible through the light-transmissive component 221.

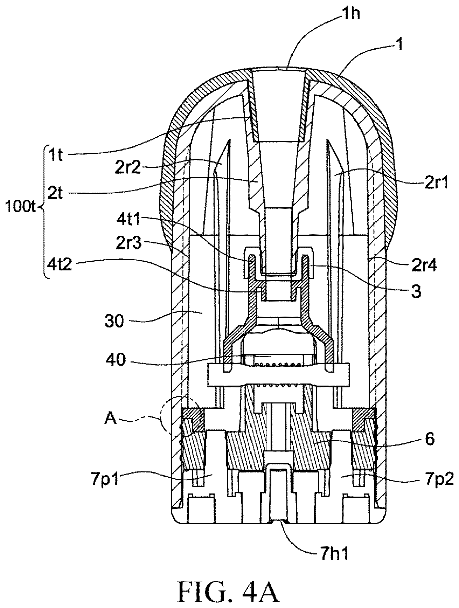

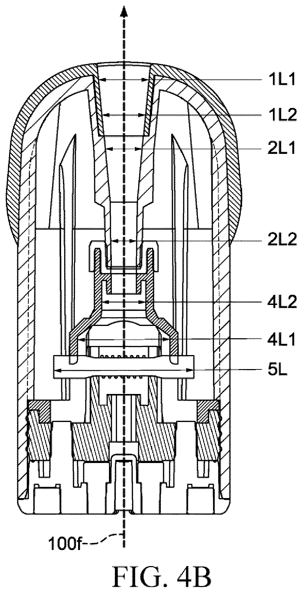

FIG. 4A and FIG. 4B are each a sectional view of a cartridge according to some embodiments of the present invention.

A cartridge housing 2 and a heating component top cap 4 define a storage compartment 30. The volatile material may be stored in the storage compartment 30. Volatile liquid may be stored in the storage compartment 30. The volatile material may be a kind of liquid. The volatile material may be a solution. In subsequent paragraphs of the present invention, the volatile material may also be referred to as e-liquid. The e-liquid is edible.

An inner wall of the cartridge housing 2 has ribs 2r1, 2r2, 2r3, and 2r4. The rib 2r1 is disposed apart from the rib 2r2. The rib 2r1 is disposed apart from the rib 2r4. The rib 2r2 is disposed apart from the rib 2r3. The ribs 2r1, 2r2, 2r3, and 2r4 may be disposed in parallel with each other. In some embodiments, the ribs 2r1, 2r2, 2r3, and 2r4 may be disposed in a non-parallel manner.

In some embodiments, the inner wall of the cartridge housing 2 may have more ribs. In some embodiments, the inner wall of the cartridge housing 2 may have fewer ribs. In some embodiments, the inner wall of the cartridge housing 2 may have a total of six ribs.

The ribs 2r1, 2r2, 2r3, and 2r4 extend toward the heating component top cap 4 from a part that is of the cartridge housing 2 and that is close to a hole 1h. One end of the ribs 2r1, 2r2, 2r3, and 2r4 is in direct contact with the heating component top cap 4. One end of the ribs 2r1, 2r2, 2r3, and 2r4 is pressed against a part of the heating component top cap 4. As shown in the dashed circle A in FIG. 4A, the rib 2r3 is pressed against a part of the heating component top cap 4. The ribs 2r1, 2r2, 2r3, and 2r4 may prevent the heating component top cap 4 from being separated from the heating component base 6.

The ribs 2r1, 2r2, 2r3, and 2r4 may strengthen the rigidity of the cartridge housing 2. The ribs 2r1, 2r2, 2r3, and 2r4 may prevent the cartridge housing 2 from being deformed by external force. The ribs 2r1, 2r2, 2r3, and 2r4 may prevent the e-liquid in the storage compartment 30 from overflowing by external force.

The heating component top cap 4 and the heating component base 6 define a vaporization chamber 40. The vaporization chamber 40 may be a cavity between the heating component top cap 4 and the heating component base 6.

The heating component 5 has the length of 5L. The vaporization chamber 40 has the maximum width 4L1. The length 5L of the heating component 5 is greater than the maximum width 4L1 of the vaporization chamber 40.

A part of the heating component 5 is disposed in the vaporization chamber 40. Both ends of the heating component 5 extend into the storage compartment 30 from a hole 4h of the heating component top cap 4. The heating component top cap 4 exposes the part of the heating component 5. The heating component top cap 4 exposes both ends of the heating component 5. Both ends of the heating component 5 are exposed in the storage compartment 30. The e-liquid in the storage compartment 30 may be adsorbed by the heating component 5 through both ends of the heating component 5. After the e-liquid adsorbed on the heating component 5 is heated by the heating wire 51, aerosol is generated in the vaporization chamber 40. The aerosol may be sucked by the user through an airflow channel lOOt formed by a tube 4t2, a tube 2t, and a tube 1t.

In some embodiments, the mouthpiece cap 1 and the cartridge housing 2 may be integrally formed. In this case, the tube 2t and the tube 1t are a same component.

The airflow channel lOOt formed by the tube 4t2, the tube 2t, and the tube 1t may have a smooth inner diameter. The inner diameter of the airflow channel 100t has no obvious segment gap at a junction of the tube 1t and the tube 2t. The inner diameter of the airflow channel lOOt has no obvious segment gap at a junction of the tube 2t and the tube 4t2. The inner diameter of the airflow channel 100t has no obvious interface at a junction of the tube 1t and the tube 2t. The inner diameter of the airflow channel lOOt has no obvious step at a junction of the tube 2t and the tube 4t2.

The airflow channel lOOt formed by the tube 4t2, the tube 2t, and the tube 1t may have a non-uniform inner diameter. For example, the tube 2t may have an inner diameter 2L1 and an inner diameter 2L2, the inner diameter 2L1 being greater than 2L2. The tube 1t has an inner diameter 1L1 and an inner diameter 1L2, the inner diameter 1L1 being greater than 1L2. In some embodiments, the airflow channel formed by the tube 4t2, the tube 2t, and the tube 1t may have a uniform inner diameter.

Referring to FIG. 4B, the heating component top cap 4 may have two parts. A part of the heating component top cap 4 has the relatively large width. An inner wall of the vaporization chamber 40 may have the non-uniform width. For example, the inner wall of the vaporization chamber 40 has the width of 4L2 and the maximum width of 4L1 due to the exterior of the heating component top cap 4. The width 4L2 is less than the width 4L1.

The seal member 3 is disposed between the tube 2t of the cartridge housing 2 and the tube 4t1 of the heating component top cap 4. The hardness of the seal member 3 may be less than the hardness of the cartridge housing 2. The hardness of the seal member 3 may be less than the hardness of the heating component top cap 4. The seal member 3 may increase the degree of tightness between the tube 2t and the tube 4t1. The seal member 3 may reduce requirements for a tolerance between the tube 2t and the tube 4t1. The seal member 3 may reduce the difficulty of manufacturing the cartridge housing 2 and the heating component top cap 4. The seal member 3 may prevent the cartridge housing 2 and the heating component top cap 4 from being damaged during the assembling. The seal member 3 may also prevent the e-liquid in the storage compartment 30 from being extracted from the hole 1h.

The tube 4t2 of the heating component top cap 4 may have an inner diameter less than that of the tube 4t1. The tube 4t2 of the heating component top cap 4 may have an outer diameter less than that of the tube 4t1. The tube 4t2 of the heating component top cap 4 extends into the vaporization chamber 40. The tube 4t2 of the heating component top cap 4 extends into the vaporization chamber 40. The tube 4t2 of the heating component top cap 4 extends toward a direction opposite to the hole 1h. The tube 4t2 may make the airflow channel closer to the heating component 5. The tube 4t2 may allow the aerosol generated in the vaporization chamber 40 to be completely discharged from the airflow channel. The tube 4t2 may prevent the aerosol generated in the vaporization chamber 40 from leaking into the storage compartment 30 from a gap between the seal member 3 and the heating component top cap 4.

Referring to FIG 4B, when the user inhales through the hole 1h, airflow 100f is generated in the cartridge 100A. A front section of the airflow 100f includes fresh air entering the vaporization chamber 40 through the hole 7h1 of the cartridge base 7. A rear section of the airflow 100f includes aerosol generated by the heating component 5. The fresh air enters the vaporization chamber 40 through the hole 7h1, and the aerosol generated by the heating component 5 is discharged from the hole 1h1 along the airflow channel 100t.

The airflow 100f generates a temperature change between the heating component 5 and the tube 4t2. Aerosol generated by the heating component 5 generates a temperature change before reaching the tube 4t2.

The non-uniform width of the inner wall of the vaporization chamber 40 may strengthen the temperature change of the airflow 100f. The non-uniform width of the inner wall of the vaporization chamber 40 may accelerate the temperature change of the airflow 100f. The temperature drops when the airflow 100f flows from the width 4L1 to 4L2. Compared with the vaporization chamber with the uniform inner wall width, when the airflow 100f flows from the width 4L1 to 4L2, the temperature decreases more greatly and drops faster. The width of the inner wall of the vaporization chamber 40 is adjusted to control the temperature of the aerosol inhaled by the user from the hole 1h. In some embodiments, the vaporization chamber 40 may also have substantially the same inner wall width.

After entering the vaporization chamber 40 through the hole 7h1, the airflow 100f is heated by the heating component 5 to generate a temperature rise Tr. In some embodiments, the temperature rise Tr may be in a range from 200°C to 220°C. In some embodiments, the temperature rise Tr may be in a range from 240°C to 260 °C. In some embodiments, the temperature rise Tr may be in a range from 260°C to 280 °C. In some embodiments, the temperature rise Tr may be in a range from 280°C to 300°C. In some embodiments, the temperature rise Tr may be in a range from 300°C to 320 °C. In some embodiments, the temperature rise Tr may be in a range from 200°C to 320°C.

The airflow flowing out of the vaporization chamber 40 may generate a temperature drop Tf before reaching the hole 1h. In some embodiments, the temperature drop Tf may be in a range of 145° to 165°. In some embodiments, the temperature drop Tf may be in a range of 165° to 185°. In some embodiments, the temperature drop Tf may be in a range of 205° to 225°. In some embodiments, the temperature drop Tf may be in a range of 225° to 245°. In some embodiments, the temperature drop Tf may be in a range of 245° to 265°. In some embodiments, the temperature drop Tf may be in a range of 145° to 265°.

The airflow channel lOOt may have a non-uniform inner diameter. The inner diameter of the airflow channel lOOt gradually increases toward the hole 1h from a position close to the heating module 5. A relatively large inner diameter close to the hole 1h may make a volume of the aerosol become larger.

The width of the inner wall of the vaporization chamber 40 and the width of the inner diameter of the airflow channel lOOt are adjusted to control the temperature of the aerosol inhaled by the user from the hole 1h. The width of the inner wall of the vaporization chamber 40 and the width of the inner diameter of the airflow channel lOOt are adjusted to control the volume of the aerosol inhaled by the user from the hole 1h.

Controlling the aerosol temperature may prevent users from being burned by the aerosol. Controlling the volume of aerosol may improve inhalation experience of the user.

In some embodiments, the aerosol inhaled by the user via the through hole 1h may have a temperature below 65°C. In some embodiments, the aerosol inhaled by the user via the through hole 1h may have a temperature below 55°C. In some embodiments, the aerosol inhaled by the user via the through hole 1h may have a temperature below 50°C. In some embodiments, the aerosol inhaled by the user via the through hole 1h may have a temperature below 45°C. In some embodiments, the aerosol inhaled by the user via the through hole 1h may have a temperature below 40°C. In some embodiments, the aerosol inhaled by the user via the through hole 1h may have a temperature below 30°C.

The circuit board 15 may further include an output detecting circuit 152, a temperature detecting circuit 153, a charge detecting circuit 154, a light-emitting component 155, a charge protecting circuit 156, a charge management circuit 157, and a power supply component protecting circuit 158. A function and an architecture of the above circuit are described in subsequent paragraphs.

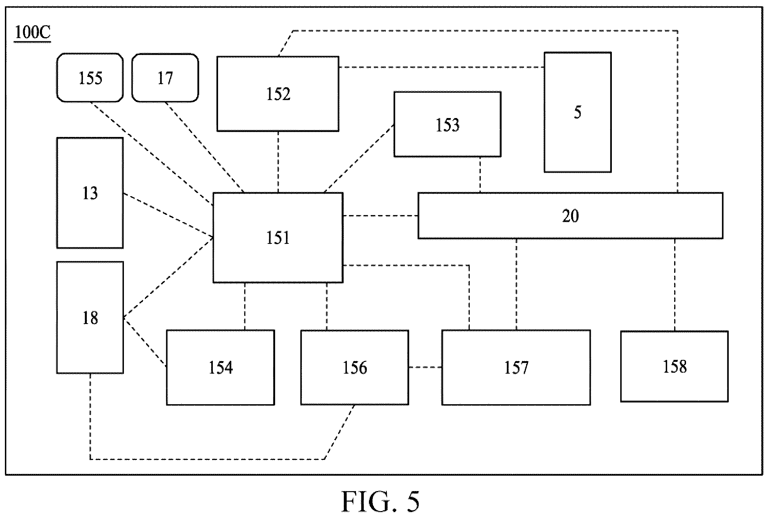

FIG. 5 is a circuit block diagram according to some embodiments of the present invention.

In some embodiments, the circuit 100C includes a controller 151, an output detecting circuit 152, a temperature detecting circuit 153, a charge detecting circuit 154, a light-emitting component 155, a charge protecting circuit 156, a charge management circuit 157, and a power supply component protecting circuit 158, a heating component 5, a sensor 13, a vibrator 17, a charging component 18, and a power supply component 20.

In some embodiments, all of the components/circuits in the circuit 100C may be disposed on the circuit board 15. In some embodiments, some of the components/circuits in the circuit 100C may be disposed outside the circuit board 15.

In some embodiments, the controller 151 may be electrically connected to the output detecting circuit 152. In some embodiments, the controller 151 may communicate with the output detecting circuit 152 bidirectionally.

In some embodiments, the controller 151 may be electrically connected to the temperature detecting circuit 153. In some embodiments, the controller 151 may communicate with the temperature detecting circuit 153 bidirectionally.

In some embodiments, the controller 151 may be electrically connected to the charge detecting circuit 154. In some embodiments, the controller 151 may provide a signal to the charge detecting circuit 154.

In some embodiments, the controller 151 may be electrically connected to the light-emitting component 155. In some embodiments, the controller 151 may provide a signal to the light-emitting component 155.

In some embodiments, the controller 151 may be electrically connected to the charge protecting circuit 156. In some embodiments, the charge protecting circuit 156 may provide a signal to the controller 151.

In some embodiments, the controller 151 may be electrically connected to the charge management circuit 157. In some embodiments, the controller 151 may communicate with the charge management circuit 157 bidirectionally.

In some embodiments, the controller 151 may be electrically connected to the sensor 13. In some embodiments, the sensor 13 may provide a signal to the controller 151.

In some embodiments, the controller 151 may be electrically connected to the vibrator 17. In some embodiments, the controller 151 may provide a signal to the vibrator 17.

In some embodiments, the controller 151 may be electrically connected to the charging component 18. In some embodiments, the charging component 18 may provide a signal to the controller 151.

In some embodiments, the controller 151 may be electrically connected to the power supply component 20. In some embodiments, the power supply component 20 may provide a signal to the controller 151.

In some embodiments, the output detecting circuit 152 may be electrically connected to the heating component 5. In some embodiments, the output detecting circuit 152 may provide a signal to the heating component 5. In some embodiments, a part of the output detecting circuit 152 may be connected in series to the heating component 5.

In some embodiments, the output detecting circuit 152 may be electrically connected to the power supply component 20. In some embodiments, the power supply component 20 may provide a signal to the output detecting circuit 152.

In some embodiments, the temperature detecting circuit 153 may be in contact with the power supply component 20.

In some embodiments, the charge detecting circuit 154 may be electrically connected to the charging component 18. In some embodiments, the charging component 18 may provide a signal to the charge detecting circuit 154.

In some embodiments, the charge detecting circuit 156 may be electrically connected to the charging component 18. In some embodiments, the charging component 18 may provide a signal to the charge detecting circuit 156.

In some embodiments, the charge management circuit 157 may be electrically connected to the charge detecting circuit 156. In some embodiments, the charge detecting component 156 may provide a signal to the charge management circuit 157.

In some embodiments, the charge management circuit 157 may be electrically connected to the power supply component 20. In some embodiments, the charge management circuit 157 may provide a signal to the power supply component 20.

In some embodiments, the power supply protecting circuit 158 is electrically connected to the power supply component 20. In some embodiments, the power supply component protecting circuit 158 is connected in series to the power supply component 20 to protect the power supply component 20.

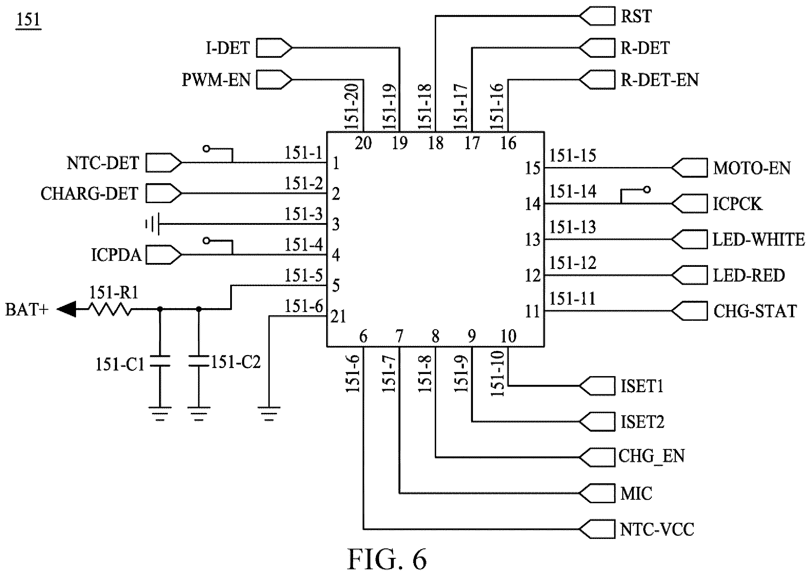

FIG. 6 is a circuit diagram of a controller according to some embodiments of the present invention.

In some embodiments, the controller 151 may control operation of the vaporization device 100.

In some embodiments, the controller 151 may receive a signal of the sensor 13. The controller 151 may receive a signal of the output detecting circuit 152. The controller 151 may receive a signal of the charge management circuit 154. The controller 151 may receive an external signal VIN.

In some embodiments, the controller 151 may output signals to the output detecting circuit 152, the temperature detecting circuit 153, the charge detecting circuit 154, the light-emitting component 155, the charge protecting circuit 156, the conductive component 11, the heating component 5, or the vibrator 17.

In some embodiments, the controller 151 includes a pin for receiving a signal. In some embodiments, the controller 151 may receive a signal using a pin 151-1. The pin 151-1 may receive a signal NTC-DET associated with a temperature of the power supply component 20.

In some embodiments, the controller 151 may receive a signal using a pin 151-2. The pin 151-2 may receive a signal CHARG-DET associated with the charging component 18.

In some embodiments, the controller 151 includes a pin connected to the ground. In some embodiments, a pin 151-3 may be used for grounding.

In some embodiments, the controller 151 receives a signal ICPDA using a pin 151-4. The signal ICPDA received by the pin 151-4 may be used to control operation logic of controller 151. In some embodiments, the signal ICPDA received by the pin 151-4 may be iterative closest point algorithm data. In some embodiments, the controller 151 outputs a signal ICPDA using the pin 151-4. The signal output by the pin 151-4 is associated with the operation logic of controller 151.

In some embodiments, the controller 151 receives a power supply signal using a pin 151-5. In some embodiments, the pin 151-5 may be electrically connected to the power supply component 20. The pin 151-5 may receive an output signal of the power supply component 20. The pin 151-5 may receive a DC signal of the power supply component 20. The pin 151-5 may be connected to the ground through a capacitor 151-C1. The pin 151-5 may be connected to the ground though two parallel capacitors 151-C1 and 151-C2. The pin 151-5 may be electrically connected to output of the power supply component 20 through a resistor 151-R1.

In some embodiments, the controller 151 outputs a signal NTC-VCC using a pin 151-6. In some embodiments, the pin 151-6 may be electrically connected to the output detecting circuit 152. The pin 151-6 may provide a signal to the output detecting circuit 152. In some embodiments, the pin 151-6 may provide a pulse width modulation signal to input of the output detecting circuit 152. A pin 151-7 may provide a pulse width modulation signal to the input of the output detecting circuit 152 to enable the output detecting circuit 152.

In some embodiments, the controller 151 receives a signal MIC using a pin 151-7. In some embodiments, the pin 151-7 may be electrically connected to the sensor 13. The pin 151-7 may receive a signal from the sensor 13. In some embodiments, the pin 151-7 may receive an analog signal from the sensor 13.

In some embodiments, the controller 151 outputs a signal CHG EN using a pin 151-8. In some embodiments, the pin 151-8 may be electrically connected to the charge protecting circuit 156. The pin 151-8 may output a signal to the charge protecting circuit 156. The pin 151-8 may output a signal to the charge protecting circuit 156, so that the charge protecting circuit converts the external signal VIN, and may generate a charging signal to be output to the charge management circuit 157.

In some embodiments, the controller 151 outputs a current setting signal ISET2 using a pin 151-9. In some embodiments, the pin 151-9 may be electrically connected to a microcontroller 157-MCU. The pin 151-9 may output a signal to the microcontroller 157-MCU. The pin 151-9 may output a signal to the microcontroller 157-MCU to set a charging current I1 for charging.

In some embodiments, the controller 151 outputs a current setting signal ISET1 using a pin 151-10. In some embodiments, the pin 151-10 may be electrically connected to a microcontroller 157-MCU. The pin 151-10 may output a signal to the charge management circuit 153. The pin 151-10 may output a signal to the microcontroller 157-MCU to set a charging current 12 for a charging chip.

In some embodiments, the controller 151 receives a signal CHG STAT using a pin 151-11. In some embodiments, the pin 151-11 may be electrically connected to the charge management circuit 157. The pin 151-11 may receive a signal associated with a charging state of the charge management circuit 157. The pin 151-11 may receive a signal associated with a charging state of the power supply component 20.

In some embodiments, the controller 151 outputs a signal LED-RED using a pin 151-12. In some embodiments, the pin 151-12 may be electrically connected to the light-emitting component 155. The pin 151-12 may output a signal to the light-emitting component 155. The pin 151-12 may output a signal to the light-emitting component 155 so that the light-emitting component emits light. The pin 151-12 may output a signal to the light-emitting component 155 so that the light-emitting component emits red light.

In some embodiments, the controller 151 outputs a signal LED-WHITE using a pin 151-13. In some embodiments, the pin 151-13 may be electrically connected to the light-emitting component 155. The pin 151-13 may output a signal to the light-emitting component 155. The pin 151-13 may output a signal to the light-emitting component 155 so that the light-emitting component emits light. The pin 151-13 may output a signal to the light-emitting component 155 so that the light-emitting component emits white light.

In some embodiments, the controller 151 receives a signal ICPCK using a pin 151-14. The signal received by the pin 151-14 may be a clock signal. The signal received by the pin 151-14 may be an iterative closest point timer signal.

In some embodiments, the controller 151 outputs a signal MOTO_EN using a pin 151-15. In some embodiments, the pin 151-15 may be electrically connected to the vibrator 17. The pin 151-15 may output the signal MOTO_EN to the vibrator 17. The pin 151-15 may output the signal MOTO EN to the vibrator 17 to enable the vibrator.

In some embodiments, the controller 151 outputs a signal R-DET-EN using a pin 151-16. In some embodiments, the pin 151-16 may be electrically connected to the output detecting circuit 152. The pin 151-16 may output a signal R-DET-EN to the output detecting circuit 152. The pin 151-16 may output the signal R-DET-EN to the output detecting circuit 152 to enable the output detecting circuit 152 for measuring a sampling resistor 152-R5. The pin 151-16 may output a signal R-DET-EN to the output detecting circuit 152 to measure data associated with a resistance value of the heating component 5.

In some embodiments, the controller 151 receives a signal R-DET using a pin 151-17. In some embodiments, the pin 151-17 may be electrically connected to the output detecting circuit 152. The pin 151-17 may receive a signal R-DET from the output detecting circuit 152. The signal R-DET may be associated with the sampling resistor 152-R5. The signal R-DET may be associated with the resistance value of the heating component 5.

In some embodiments, the controller 151 receives a signal RST using a pin 151-18. The signal RST may be a reset signal. The signal RST may be used to reset the controller 151.

In some embodiments, the controller 151 receives a signal I-DET from the output detecting circuit 152 using a pin 151-19. The signal I-DET may be associated with a current of the heating component 5.

In some embodiments, the controller 151 outputs a signal PWM-EN using a pin 151-20. In some embodiments, the pin 151-20 may be electrically connected to the output detecting circuit 152. The pin 151-20 may output a signal PWM-EN to the output detecting circuit 152. The signal PWM-EN may be a pulse width modulation signal. The pin 151-20 may output the signal PWM-EN to the output detecting circuit 152 so that the output detecting circuit 152 generates a signal PWM-OUT. The signal PWM-OUT may be a pulse width modulation signal. In some embodiments, the signal PWM-OUT generated by the output detecting circuit 152 may be transmitted to the conductive component 11. In some embodiments, the signal PWM-OUT generated by the output detecting circuit 152 may be converted into a DC signal before being transmitted to the conductive component 11.

In some embodiments, the controller 151 may include a pin 151-21 connected to the ground. In some embodiments, the pin 151-21 may be connected to a cathode of the power supply component 20.

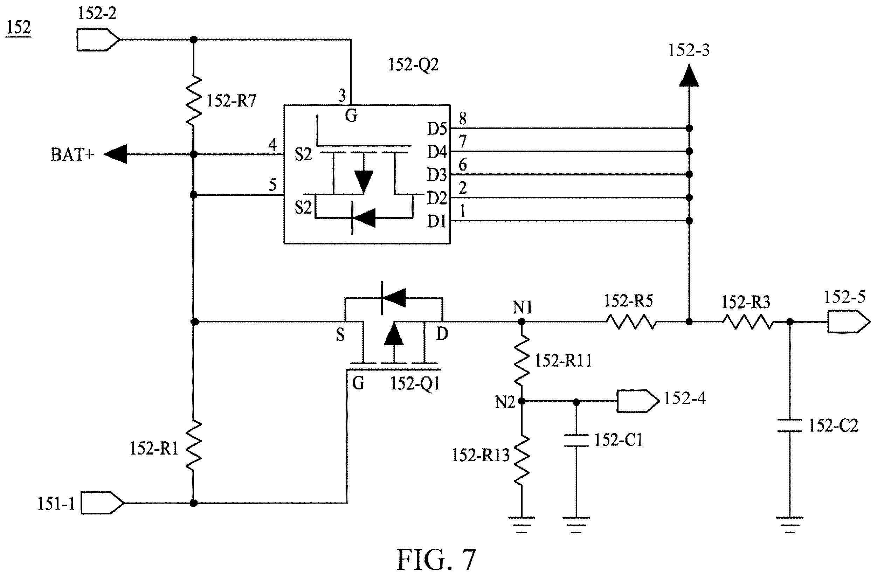

FIG. 7 is a schematic circuit diagram of an output detecting circuit according to some embodiments of the present invention.

In some embodiments, the output detecting circuit 152 detects a load of the heating component 5 through the sampling resistor 152-R5. The output detecting circuit 152 may detect the load of the heating component 5 and a load of the conductive component 11 through the sampling resistor 152-R5. The output detecting circuit 152 may detect a current of the heating component 5 through the sampling resistor 152-R5. The output detecting circuit 152 may detect the current of the heating component 5 and a current of the conductive component 11 through the sampling resistor R5. In some embodiments, the output detecting circuit 152 may output a power signal to the conductive component 11.

In some embodiments, the output detecting circuit 152 includes a transistor 152-Q1, a transistor 152-Q2, and the sampling resistor 152-R5.

In some embodiments, the transistor 152-Q1 may be a P-type metal-oxide-semiconductor transistor. The transistor 152-Q1 may be a logic level P-type metal-oxide-semiconductor transistor. In some embodiments, the transistor 152-Q1 may be an N-type metal-oxide-semiconductor transistor. The transistor 152-Q1 may be a logic level N-type metal-oxide-semiconductor transistor.

In some embodiments, a gate of the transistor 152-Q1 may be connected to input 152-1 of the output detecting circuit 152. A source of the transistor 152-Q1 may be connected to a DC power supply. The source of the transistor 152-Q1 may be connected to output of the power supply component 20. A resistor 152-R7 may be connected between the gate and the source of the transistor 152-Q1. A drain of the transistor 152-Q1 may be connected to the sampling resistor 152-R5. The drain of the transistor 152-Q1 may be connected to a resistor 152-R11.

In some embodiments, the transistor 152-Q2 may be a P-type metal-oxide-semiconductor transistor. The transistor 152-Q2 may be a power P-type metal-oxide-semiconductor transistor. In some embodiments, the transistor 152-Q2 may be an N-type metal-oxide-semiconductor transistor. The transistor 152-Q2 may be a power N-type metal-oxide-semiconductor transistor.

In some embodiments, a gate of the transistor 152-Q2 may be connected to a pin 152-2 of the output detecting circuit. The gate of the transistor 152-Q2 may be connected to the DC power supply through the resistor 152-R7. The gate of the transistors 152-Q2 may receive an output signal BAT+ of the power supply component 20 through the resistor 152-R7. A source of the transistor 152-Q2 may be connected to the DC power supply. The source of the transistor 152-Q2 may receive the output signal BAT+ of the power supply component 20. The source of the transistor 152-Q2 may be connected to the pin 152-2 of the output detecting circuit 152 through the resistor 152-R7. The source of the transistor 152-Q2 may be connected to the gate of the transistor 152-Q2 through the resistor 152-R7. The drain of the transistor may be linked to output 152-3 of the output detecting circuit. The output 152-3 of the detecting circuit may output a pulse width modulation signal PWM-OUT.

In some embodiments, the sampling resistor 152-R5 may be electrically connected to the output 152-3 of the output detecting circuit. The sampling resistor 152-R5 may be electrically connected to the resistor 152-R11. In some embodiments, the resistor 152-R11 may be connected in series to a resistor 152-R13. The resistor 152-R11 may be connected in series to a capacitor 152-C1. The resistor 152-R13 may be connected in parallel to the capacitor 152-C1. Output 152-4 of the output detecting circuit may be connected to the ground through the resistor 152-R13. The output 152-4 of the output detecting circuit may be connected to the ground through the capacitor 152-C1. The output 152-4 of the output detecting circuit may be connected to the resistor 152-R11.

In some embodiments, the sampling resistor 152-R5 is electrically connected to the resistor 152-R3. The sampling resistor 152-R5 may be electrically connected to output 152-5 of the output detecting circuit through the resistor 152-R3. The output 152-5 of the output detecting circuit is connected to the ground through the capacitor 152-C2.

In some embodiments, the sampling resistor 152-R5 may be a low-resistance resistor. The sampling resistor 152-R5 may be a precision resistor.

In some embodiments, the output detecting circuit 152 may be electrically connected to the controller 151. In some embodiments, the output detecting circuit 152 may receive a signal from the controller 151. A pin 152-1 of the output detecting circuit 152 may receive a signal from a pin 151-16 of the controller 151. The pin 152-1 of the output detecting circuit 152 may receive a pulse width modulation signal from the pin 151-16 of the controller 151. The pin 152-2 of the output detecting circuit 152 may receive a signal from a pin 151-20 of the controller 151. The pin 152-2 of the output detecting circuit 152 may receive a signal PWM-EN from the pin 151-20 of the controller 151.

In some embodiments, the output detecting circuit 152 may output a signal to the controller 151. The output 152-4 of the output detecting circuit may output a signal to the pin 151-17 of the controller 151. The output 152-5 of the output detecting circuit may output a signal to the pin 151-19 of the controller 151.

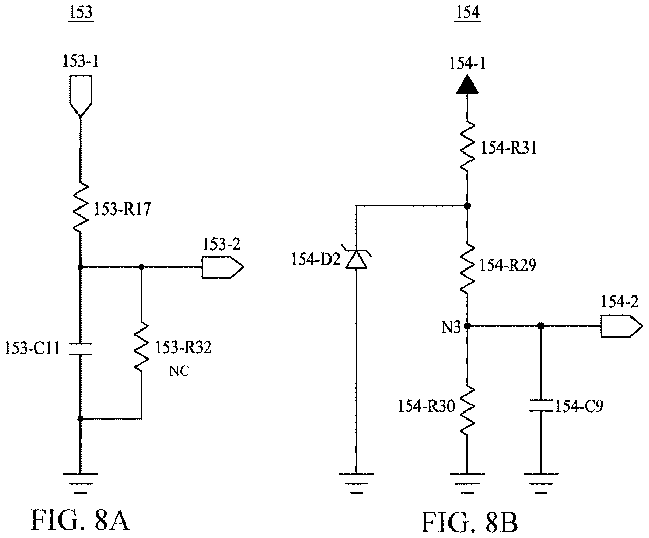

FIG. 8A is a schematic circuit diagram of a temperature detecting circuit according to some embodiments of the present invention.

In some embodiments, the temperature detecting circuit 153 includes a thermistor 153-R17. The thermistor 153-R17 may be a negative temperature coefficient (NTC) thermistor. In some embodiments, the thermistor 153-R17 may be a positive temperature coefficient (PTC) thermistor. In some embodiments, the thermistor may be in contact with the power supply component 20.

In some embodiments, the thermistor 153-R17 is connected to a pin 153-1 of the temperature detecting circuit 153. The pin 153-1 of the temperature detecting circuit may receive a signal NTC-VCC from the pin 151-6 of controller 151. The thermistor 153-R17 may be connected to a pin 153-2 of the temperature detecting circuit 153. The pin 153-2 of the temperature detecting circuit 153 may output a signal to the pin 151-1 of the controller 151. The temperature detecting circuit 153 may output a signal associated with a resistance of the thermistor. The temperature detecting circuit 153 may output a signal associated with the temperature of the power supply component 20.

In some embodiments, the thermistor 153-R17 is connected to the ground through a capacitor 153-C11. The capacitor 153-C11 is electrically connected to the pin 153-2 of the temperature detecting circuit 153. When a resistor 153-R32 is connected in parallel to the capacitor 153-C11, the thermistor 153-R17 may be connected to the ground through the resistor 153-R32 and the capacitor 153-C11.

FIG. 8B is a schematic circuit diagram of a charge detecting circuit according to some embodiments of the present invention.

In some embodiments, a pin 154-1 of the charge detecting circuit 154 may receive an external signal VIN. The charge detecting circuit 154 may output a charge detection signal to the pin 151-2 of the controller 151 according to the external signal VIN.

In some embodiments, the charge detecting circuit 154 includes a voltage dividing circuit consisting of a resistor 154-R29 and a resistor 154-R30. A node N3 of the charge detecting circuit 154 between the resistor 154-R29 and the resistor 154-R30 is electrically connected to a pin 154-2 of the charge detecting circuit 154. The pin 154-2 of the charge detecting circuit 154 outputs a signal associated with the external signal VIN. The charge detecting circuit 154 includes a capacitor 154-C9 and a resistor 154-R30 connected in parallel. The charge detecting circuit 154 includes a voltage limiting diode 154-D2. The voltage limiting diode 154-D2 may limit a voltage of the voltage dividing circuit consisting of the resistor 154-R29 and the resistor 154-R30. The charge detecting circuit 154 includes a buffer resistor 154-R31 between the pin 154-1 of the charge detecting circuit and the voltage dividing circuit.

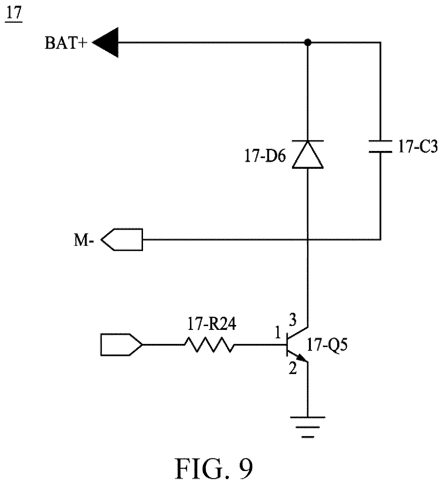

FIG. 9 is a schematic circuit diagram of a vibrator according to some embodiments of the present invention.

In some embodiments, the vibrator 17 may receive a signal from a pin 151-15 of the controller 151 to enable a motor 17-M.

In some embodiments, the vibrator 17 includes a transistor 17-Q5. The transistor 17-Q5 may be a bipolar transistor.

In some embodiments, a base of the transistor 17-Q5 may receive a signal from the pin 151-15 of the controller 151 through a resistor 17-R24. An emitter of the transistor 17-Q5 is connected to the ground. A collector of the transistor 17-Q5 may be connected to a cathode M- of the motor 17-M (not shown). The collector of the transistor 17-Q5 may be connected to an anode of a diode 17-D6. The collector of the transistor 17-Q5 may be connected to a capacitor 17-C3. All of an anode (not shown) of the motor 17-M, a cathode of the diode 17-D6, and the capacitor 17-C3 may receive the output signal BAT+ of the power supply component 20.

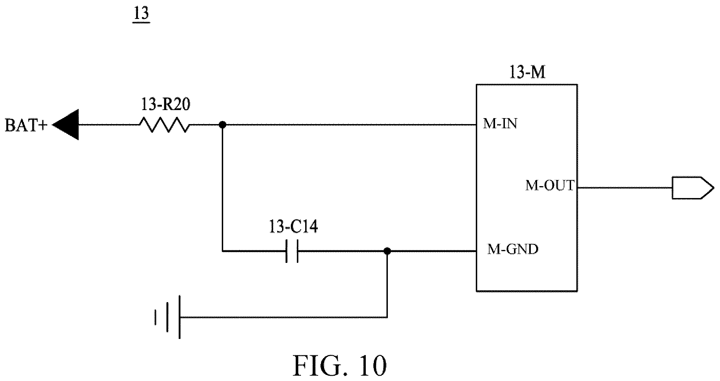

FIG. 10 is a schematic circuit diagram of a sensor according to some embodiments of the present invention.

In some embodiments, the sensor 13 may receive a DC power supply. The sensor 13 may receive the output signal BAT+ from the power supply component 20.

In some embodiments, the sensor 13 includes a microphone 13-M. The microphone 13-M may sense a sound wave, an airflow, and an air pressure change. The microphone 13-M may sense a sound wave generated from an inhalation action of a user. The microphone 13-M may sense an airflow generated from an inhalation action of a user. The microphone 13-M may sense an air pressure change generated from an inhalation action of a user.

Input M-IN of the microphone 13-M may receive the output signal BAT+ of the power supply component 20 through a resistor 13-R20. Output M-OUT of the microphone 13-M may provide a signal to the pin 151-7 of the controller 151. A ground terminal M-GND of the microphone 13-M is connected to the ground, and may be connected to the input of the microphone 13-M through a capacitor 13-C14.

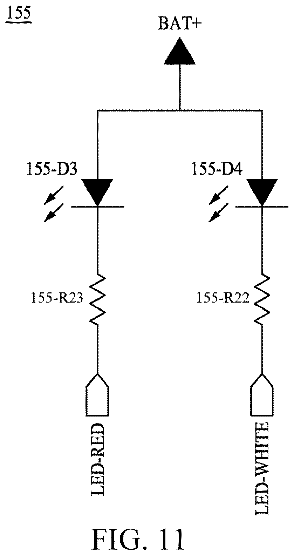

FIG. 11 is a schematic circuit diagram of a light-emitting component according to some embodiments of the present invention.

In some embodiments, the light-emitting component 155 may emit blinking light. The light-emitting component 155 may emit light with increasing intensity. The light-emitting component 155 may emit light with decreasing intensity. The light-emitting component 155 may emit red light. The light-emitting component 155 may emit white light. In some embodiments, the light-emitting component 155 may emit light of other colors.

In some embodiments, the light-emitting component 155 receives a DC power supply. The light-emitting component 155 receives the output signal BAT+ of the power supply component 20. The light-emitting component 155 includes light-emitting diodes 155-D3 and 155-D4. The light-emitting diode 155-D3 may be a red-light-emitting diode. The light-emitting diode 155-D4 may be a white-light-emitting diode.

In some embodiments, both an anode of the light-emitting diode 155-D3 and an anode of the diode 155-D4 may receive the output signal BAT+ of the power supply component 20. A cathode of the light-emitting diode 155-D3 may receive a signal LED-RED of the pin 151-12 of the controller 151 through the resistor 155-R23. A cathode of a light-emitting diode 155-D4 may receive a signal LED-WHITE of the pin 151-13 of the controller 151 through the resistor 155-R22.

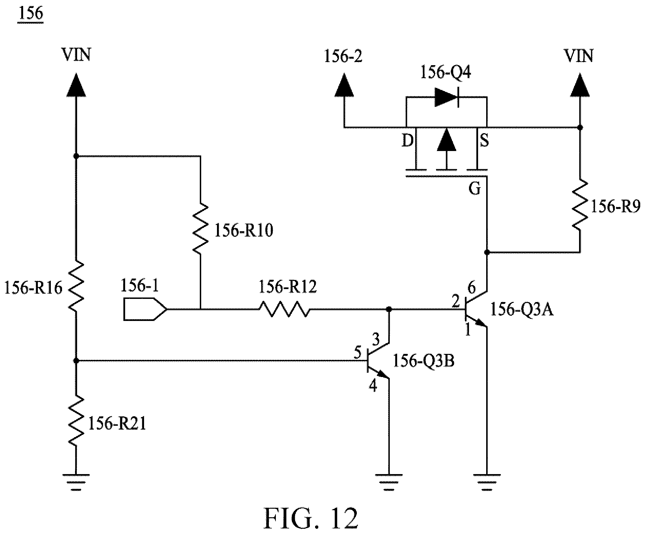

FIG. 12 is a schematic circuit diagram of a charge protecting circuit according to some embodiments of the present invention.

In some embodiments, the charge protecting circuit 156 receives an external signal VIN. The charge protecting circuit 156 may receive a charging enable signal CHG_EN from the controller. Input 156-1 of the charge protecting circuit 156 may receive the charging enable signal CHG EN from the pin 151-8 of the controller 151. The charge protecting circuit 156 may output a charging signal VCC_CHG to the charge management circuit 154. The charge protecting circuit 156 may control the charging signal VCC CHG based on the charging enable signal CHG EN and the external signal VIN.

In some embodiments, the charge protecting circuit 156 includes a transistor 156-Q3A, a transistor 156-Q3B, and a transistor 156-Q4.

In some embodiments, the transistor 156-Q3A may be a bipolar transistor.

In some embodiments, when a resistor 156-R10 is disposed, a base of the transistor 156-Q3A may receive an external signal VIN through a resistor 156-R12 and the resistor 156-R10. The base of the transistor 156-Q3A may be connected to the input 156-1 of the charge protecting circuit 156 through the resistor 156-R12. A collector of the transistor 156-Q3B may be connected to the base of the transistor 156-Q3A. A collector of the transistor 156-Q3A may be connected to a source of the transistor 156-Q4 through a resistor 156-R9. The collector of the transistor 156-Q3A may receive the external signal VIN through the resistor 156-R9. The collector of the transistor 156-Q3A may be connected to a gate of the transistor 156-Q4. An emitter of the transistor 156-Q3A may be connected to the ground.

In some embodiments, the transistor 156-Q3B may be a bipolar transistor.

In some embodiments, a base of the transistor 156-Q3B may be connected to an external signal through a resistor 156-R16. The base of the transistor 156-Q3B is connected to the ground through a resistor 156-R21. The collector of the transistor 156-Q3B may be connected to a pin 156-1 of the charge protecting circuit 156 through the resistor 156-R12. The collector of the transistor 156-Q3B may be connected to the base of the transistor 156-Q3A. An emitter of the transistor 156-Q3B is connected to the ground.

In some embodiments, the transistor 156-Q4 may be a P-type metal-oxide-semiconductor transistor. The transistor 156-Q4 may be a logic level P-type metal-oxide-semiconductor transistor. In some embodiments, the transistor 156-Q4 may be an N-type metal-oxide-semiconductor transistor. The transistor 156-Q4 may be a logic level N-type metal-oxide-semiconductor transistor.

The gate of the transistor 156-Q4 may be connected to the base of the transistor 156-Q3B. The gate of the transistor 156-Q4 may be connected to the source of the transistor 156-Q4 through a resistor 151-R9. The source of the transistor 156-Q4 may receive an external signal VIN. A drain of the transistor 156-Q4 may be connected to a pin 156-2 of the charge protecting circuit 156.

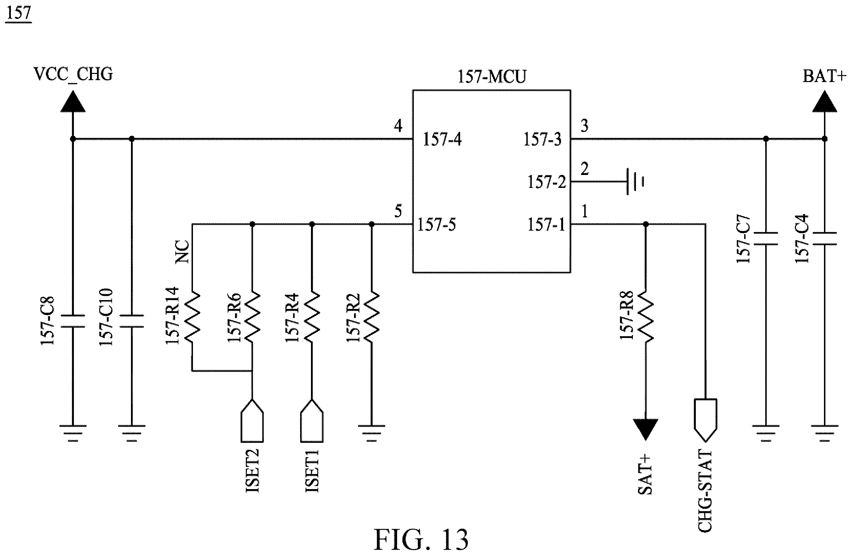

FIG. 13 is a schematic circuit diagram of a charge management circuit according to some embodiments of the present invention.

In some embodiments, the charge management circuit 157 may receive the charging signal VCC_CHG of the charge protecting circuit 153. The charge management circuit 157 may control charging of the power supply component 20.

In some embodiments, the charge management circuit 157 may receive current setting signals ISET1 and ISET2 of the controller 151 to set a charging current. The charge management circuit 157 may set the charging current to at least three different charging currents based on the current setting signals ISET1 and ISET2 of the controller 151.

In some embodiments, the charge management circuit 157 may set the charging current to 75 milliamps, 175 milliamps, or 500 milliamps based on the current setting signals ISET1 and ISET2 of the controller 151.

In some embodiments, the charge management circuit 157 includes a microcontroller 157-MCU. The microcontroller 157-MCU may be a power management chip.

In some embodiments, a pin 157-1 of the microcontroller 157-MCU may be connected to the power supply component 20 through a resistor 157-R8. The pin 157-1 of the microcontroller 157-MCU may provide a charging status signal CHG-STAT to the pin 151-11 of the controller 151.

In some embodiments, a pin 157-2 of the microcontroller 157-MCU may be connected to the ground.

In some embodiments, a pin 157-3 of the microcontroller 157-MCU may be connected to the power supply component 20 to control the charging of the power supply component 20. The pin 157-3 of the microcontroller 157-MCU may be connected to the ground through capacitors 157-C4 and 157-C7.

In some embodiments, the pin 157-4 of the microcontroller 157-MCU receives a charging signal from the charge protecting circuit 153. The pin 157-4 of the microcontroller 157-MCU may be connected to the ground through a capacitor 157-C8. The pin 157-4 of the microcontroller 157-MCU may be connected to the ground through capacitors 157-C8 and 157-C10.

In some embodiments, a pin 157-5 of the microcontroller 157-MCU may be connected to the ground through a resistor 157-R2. The pin 157-5 may receive the current setting signal ISET1 from the pin 151-10 of the controller 151 through a resistor 157-R4. The pin 157-5 may receive the current setting signal ISET2 from the pin 151-9 of the controller 151 through a resistor 157-R6. When the charge management circuit 157 includes the resistor 157-R14, the pin 157-5 may receive the current setting signal ISET2 from the pin 151-9 of controller 151 through the resistor 157-R6.

In some embodiments, the charging circuit may include the charge protecting circuit 156 and the charge management circuit 157. In some embodiments, the charge protecting circuit 156 and the charge management circuit 157 may form a charging circuit. In some embodiments, the charging circuit may be an integrated circuit including a charge protecting circuit 156 and a charge management circuit 157.

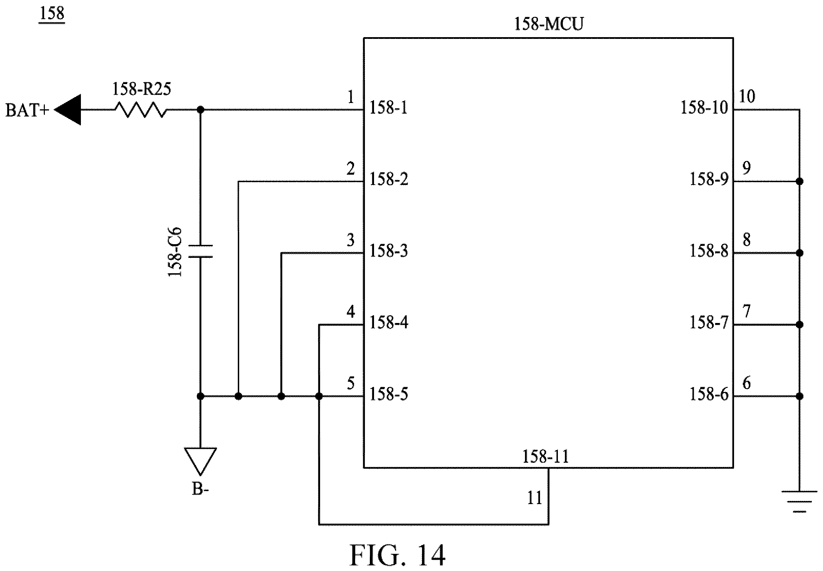

FIG. 14 is a schematic circuit diagram of a power supply component protecting circuit according to some embodiments of the present invention.

In some embodiments, the power supply component protecting circuit 158 may provide functions such as reverse battery protection, over-temperature protection, over-current protection, and charger detection.

In some embodiments, the power supply component protecting circuit 158 includes a power supply component protecting chip 158-MCU.

In some embodiments, a pin 158-1 of the power supply component protecting chip 158-MCU may be connected to an anode of the power supply component 20 through a resistor 158-R25. The pin 158-1 of the power supply component protecting chip 158-MCU may be connected to the cathode of the power supply component 20 through a capacitor 158-C6.

In some embodiments, pins 158-2 to 158-5 and 158-11 of the power supply component protecting chip 158-MCU may be connected to the cathode of the power supply component 20.

In some embodiments, pins 158-6 to 158-10 of the power supply component protecting chip 158-MCU are connected to the ground

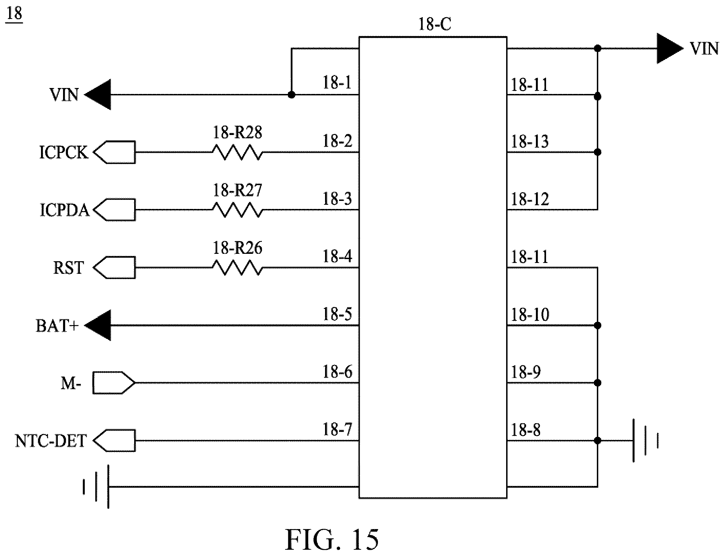

FIG. 15 is a schematic circuit diagram of a charging component according to some embodiments of the present invention.

In some embodiments, the charging component 18 may be a 14-pin connector (18-C). The charging component 18 may be a USB connection circuit.

In some embodiments, all input pins 18-12 to 18-14 of the 14-pin connector 18-C transmit an external signal VIN. The input pins 18-8 to 18-11 are all connected to the ground.

In some embodiments, an output pin 18-1 of the 14-pin connector 18-C transmits an external signal VIN.

In some embodiments, an output pin 18-2 of the 14-pin connector 18-C transmits an iterative closest point timer signal ICPCK through a resistor 18-R28.

In some embodiments, an output pin 18-3 of the 14-pin connector 18-C transmits iterative closest point algorithm data ICPDA through a resistor 18-R27.

In some embodiments, an output pin 18-4 of the 14-pin connector 18-C transmits a reset signal RST through a resistor 18-R26.

In some embodiments, an output pin 18-5 of the 14-pin connector 18-C transmits the output signal BAT+ of the power supply component 20.

In some embodiments, an output pin 18-6 of the 14-pin connector 18-C transmits a signal M- of cathode of the motor.

In some embodiments, an output pin 18-7 of the 14-pin connector 18-C transmit a detection signal NTC-DET associated with the thermistor.

### Output Mode and Smoke Mode

The vaporization device 100 may set an output mode of the vaporization device 100 using a combination of the controller 151, the output detecting circuit 152, the sensor 13, the conductive component 11, and the heating component 5 according to an inhalation action of a user.

In some embodiments, when the sensor 13 detects an inhalation action A1, the sensor may transmit a sensing signal MIC to the pin 151-7 of the controller 151. In some embodiments, the sensor 13 may detect a sound wave. The sensor 13 may sense an airflow, and may detect an air pressure change. In some embodiments, the sensor 13 may detect a sound wave generated by an inhalation action of a user. The sensor 13 may detect an airflow generated from an inhalation action of a user. The sensor 13 may detect an air pressure change generated from an inhalation action of a user.

In some embodiments, during a time period T1, the controller 151 may generate an enable signal EN1 based on a sensing signal MIC, and the pin 151-20 of the controller 151 transmits the enable signal EN1 to the output detecting circuit 152. The gate of the transistor 152-Q2 of the output detecting circuit 152 may receive the enable signal EN1. The source of the transistor 152-Q2 is connected to the output signal BAT+ of the power supply component 20. Based on the enable signal EN1, the transistor 152-Q2 may generate, at the drain, an output signal OUT1 corresponding to the output signal BAT+. The output signal OUT1 is output from the pin 152-3 of the output detecting circuit 152. In some embodiments, the output detecting circuit 152 may provide the output signal OUT1 to the conductive component 11, and the conductive component 11 may transmit the output signal to the heating component 5 to output a power P1. In some embodiments, the heating line 51 of the heating component 5 generates thermal energy associated with the power P1. In some embodiments, the power supply component 20 may output the power P1 through the output detecting circuit 152 to generate thermal energy in the heating line.

In some embodiments, during a time period T2, based on the sensing signal MIC, the controller 151 may generate an enable signal EN2, and the pin 151-20 of the controller 151 transmits the enable signal EN2 to the output detecting circuit 152. The gate of the transistor 152-Q2 of the output detecting circuit 152 may receive the enable signal EN2. The source of the transistor 152-Q2 is connected to the output signal BAT+ of the power supply component 20. Based on the enable signal EN2, the transistor 152-Q2 may generate, at the drain, an output signal OUT2 corresponding to the output signal BAT+. The output signal OUT2 is output from the pin 152-3 of the output detecting circuit 152. In some embodiments, the output detecting circuit 152 may provide the output signal OUT2 to the conductive component 11, and the conductive component 11 may transmit the output signal to the heating component 5 to output a power P2. In some embodiments, the heating line 51 of the heating component 5 generates thermal energy associated with the power P2. In some embodiments, the power supply component 20 may output the power P2 through the output detecting circuit 152 to generate thermal energy in the heating line.

In some embodiments, the time period T1 may be before the time period T2. In some embodiments, the time period T2 may immediately follow the time period T1. In some embodiments, the time period T1 and the time period T2 are continuous. In some embodiments, the time period T1 may be shorter than the time period T2. In some embodiments, T1 is in a range of 0.3 seconds to 1.5 seconds. In some embodiments, T1 is in a range of 0.5 seconds to 1 second. In some embodiments, the time period T1 may have a length of 0.8 seconds. In some embodiments, T2 is in a range of 3 seconds to 6 seconds. In some embodiments, T2 is in a range of 4 seconds to 5 seconds. In some embodiments, the time period T2 may have a length of 4.2 seconds.

In some embodiments, the power P1 may be greater than the power P2. In some embodiments, P1 is in a range of 7.2W to 9W. In some embodiments, the power P1 may be 7.8W. In some embodiments, P2 is in a range of 4.5W to 9W. In some embodiments, P2 is in a range of 6W to 8W. In some embodiments, the power P2 may be 6.5W.

If the vaporization device 100 is used by a user a few time period before, the heating component 5 is not completely cooled. If the vaporization device 100 is used by a user a few time period before, the heating component 5 has a specific temperature. In this case, the output power P3 may be used to generate even aerosol. The power P3 may increase a usage time of the power supply component 20.

In some embodiments, after the time periods T1 and T2, the output detecting circuit 152 stops outputting a power to the heating component 5 through the conductive component 11, and the controller 151 may enable a timer to start timing. When the sensor 13 detects an inhalation action A2, the sensor 13 transmits a sensing signal MIC2 to the controller 151, and the timer stops timing.

When the controller 151 determines that a timing length of the timer is less than or equal to a threshold TN1, during a time period T3, the controller 151 may generate an enable signal EN3 based on the sensing signal MIC, and the pin 151-20 of the controller 151 transmits the enable signal EN3 to the output detecting circuit 152. The gate of the transistor 152-Q2 of the output detecting circuit 152 may receive the enable signal EN3. The source of the transistor 152-Q2 is connected to the output signal BAT+ of the power supply component 20. Based on the enable signal EN2, the transistor 152-Q2 generates, at the drain, an output signal OUT3 corresponding to the output signal BAT+. The output signal OUT3 is output from the pin 152-3 of the output detecting circuit 152. In some embodiments, the output detecting circuit 152 may provide the output signal OUT3 to the conductive component 11, and the conductive component 11 may transmit the output signal to the heating component 5 to output a power P3. In some embodiments, the heating line 51 of the heating component 5 generates thermal energy associated with the power P3. In some embodiments, the power supply component 20 may output the power P3 through the output detecting circuit 152 to generate thermal energy in the heating line.

In some embodiments, a sum of the time period T3 and the time period 1 may be substantially same as a sum of the time period 3 and the time period T2. In some embodiments, T3 is in a range of 3 seconds to 7 seconds. In some embodiments, T3 is in a range of 4 seconds to 6 seconds. In some embodiments, the time period T3 may be 5 seconds.

In some embodiments, the power P3 may be substantially the same as the power P2. In some embodiments, P2 is in a range of 4.5W to 9W. In some embodiments, P2 is in a range of 6W to 8W. In some embodiments, the power P3 may be 6.5W.

If the vaporization device 100 is used by a user a few time period before, the heating component 5 is not completely cooled. If the vaporization device 100 is used by a user a few time period before, the heating component 5 has a specific temperature. In this case, the output power P3 may be used to generate even aerosol. The power P3 may increase a usage time of the power supply component 20.

When the controller 151 determines that the timing length of the timer is greater than the threshold TN1, during a time period T4, the controller 151 may generate an enable signal EN4 based on the sensing signal MIC, and the pin 151-20 of the controller 151 transmits the enable signal EN4 to the output detecting circuit 152. The gate of the transistor 152-Q2 of the output detecting circuit 152 may receive the enable signal EN4. The transistor 152-Q2 may generate, at the drain, an output signal OUT4. The output signal OUT4 is output from the pin 152-3 of the output detecting circuit 152. In some embodiments, the output detecting circuit 152 may provide the output signal OUT4 to the conductive component 11, and the conductive component 11 may transmit the output signal to the heating component 5 to output a power P4. In some embodiments, the heating line 51 of the heating component 5 generates thermal energy associated with the power P4. In some embodiments, the power supply component 20 may output the power P4 through the output detecting circuit 152 to generate thermal energy in the heating line.

When the controller 151 determines that the timing length of the timer is greater than the threshold TN1, during a time period T5, the controller 151 may generate an enable signal EN5 based on the sensing signal MIC, and the pin 151-20 of the controller 151 transmits the enable signal EN5 to the output detecting circuit 152. The gate of the transistor 152-Q2 of the output detecting circuit 152 may receive the enable signal EN5. The transistor 152-Q2 may generate, at the drain, an output signal OUT5. The output signal OUT5 is output from the pin 152-3 of the output detecting circuit 152. In some embodiments, the output detecting circuit 152 may provide the output signal OUT5 to the conductive component 11, and the conductive component 11 may transmit the output signal to the heating component 5 to output a power P5. In some embodiments, the heating line 51 of the heating component 5 generates thermal energy associated with the power P5. In some embodiments, the power supply component 20 may output the power P5 through the output detecting circuit 152 to generate thermal energy in the heating line. In some embodiments, the power supply component 20 may output a power P5 to the heating component 5.

In some embodiments, the time period T4 may be before the time period T5. In some embodiments, the time period T5 may immediately follow the time period T4. In some embodiments, the time period T4 and the time period T5 are continuous. In some embodiments, T4 is in a range of 0.3 seconds to 1.5 seconds. In some embodiments, T4 is in a range of 0.5 seconds to 1 second. In some embodiments, the time period T4 may be shorter than the time period T5. In some embodiments, the time period T4 may have a length of 0.8 seconds. In some embodiments, T5 is in a range of 3 seconds to 6 seconds. In some embodiments, T5 is in a range of 4 seconds to 5 seconds. In some embodiments, the time period T5 may have a length of 4.2 seconds.

In some embodiments, the power P4 is greater than the power P5. In some embodiments, P4 is in a range of 7.2W to 9W. In some embodiments, the power P4 may be 7.8W. In some embodiments, P5 is in a range of 4.5W to 9W. In some embodiments, P5 is in a range of 6W to 8W. In some embodiments, the power P5 may be 6.5W.

Based on the threshold TN1, it may be determined whether the vaporization device 100 is not used for a long time. When the vaporization device 100 is not used by a user for a long time, the heating component 5 presents a cooling state. When the user performs a first inhalation action on the vaporization device 100, the vaporization device 100 may output a larger power P1 during the time period T1. The larger power T1 can accelerate an aerosol generation speed. When the inhalation action of the user reaches the time period T2, the heating component 5 already has a specific temperature, and the vaporization device 100 may reduce the output power to P5. The reduced output power P5 may be used to generate even aerosol. The reduced power P5 may increase a usage time of the power supply component 20. In some embodiments, the threshold TN1 is in a range of 15 seconds to 35 seconds. In some embodiments, the threshold TN1 is in a range of 20 seconds to 30 seconds. In some embodiments, the threshold TN1 may be 25 seconds.

In some embodiments, after the time period T3 or the time periods T4 and T5, the output detecting circuit 152 stops outputting a power to the heating component 5 through the conductive component 11, and the controller 151 may enable a timer to start timing. In some embodiments, the controller 151 may repeat the threshold TN1 determining operation, so that the power supply component 20 supplies a specific power to the heating component 5 through the output detecting circuit 152. In some embodiments, the specific power may be a power P3, a power P4, or a power P5.

### Smoke State

The vaporization device 100 may set a light emitting mode of the light-emitting component 155 using a combination of the controller 151, the sensor 13, and the light-emitting component 155 according to an inhalation action of a user.

In some embodiments, when the sensor 13 detects an inhalation action A1 or A2, the sensor 13 may transmit a sensing signal MIC1 or MIC2 to the pin 151-7 of the controller 151.

Based on the sensing signal MIC1 or MIC2, the controller 151 may generate a light-emitting enable signal L1. The light-emitting enable signal L1 is transmitted through the pin 151-13 of the controller 151 to the light-emitting component 154, and the light-emitting component 154 emits light based on the light-emitting enable signal L1. In some embodiments, the light-emitting diode 155-D4 of the light-emitting component 154 emits white light. The light emitted by the light-emitting component 155 is visible through the light-transmissive component 221.

In some embodiments, the light-emitting enable signal L1 has intensity changing over time, so that the light-emitting component 155 emits light with intensity changing over time. In some embodiments, the intensity of the light-emitting enable signal L1 gradually increases over time. The intensity of the light emitted by the light-emitting component 155 gradually increases over time. In some embodiments, the intensity of the light emitting enable signal L1 gradually increases over time. When the time increases to a preset time, the intensity of the light emitting enable signal L1 is maintained. In some embodiments, the preset time is in a range of 1 second to 3 seconds. In some embodiments, the preset time may be 2 seconds.

In some embodiments, after the sensor 13 detects the inhalation action A1 or A2, if the user stops the inhalation action, the sensor 13 stops transmitting the sensing signal MIC1 or MIC2. The controller 151 may generate a light-emitting enable signal L2. The light-emitting enable signal L2 is transmitted through the pin 151-13 of the controller 151 to the light-emitting component 154, and the light-emitting component 154 emits light based on the light-emitting enable signal L2. In some embodiments, the light-emitting diode 155-D4 of the light-emitting component 154 emits white light. The light emitted by the light-emitting component 155 is visible through the light-transmissive component 221.

In some embodiments, the light-emitting enable signal L2 has intensity changing over time, so that the light-emitting component 155 emits light with intensity changing over time. In some embodiments, the intensity of the light-emitting enable signal L2 gradually decreases over time. The intensity of the light emitted by the light-emitting component 155 gradually decreases over time. In some embodiments, when the time increases to the preset time, the light emitting enable signal L2 disappears. In some embodiments, the preset time is in a range of 1 second to 3 seconds. In some embodiments, the preset time may be 2 seconds.

### Smoke Overtime Indication

The vaporization device 100 may set an output mode of the vaporization device 100 using a combination of the controller 151, the output detecting circuit 152, the sensor 13, the conductive component 11, and the heating component 5 according to an inhalation action of a user.

In some embodiments, when the sensor 13 detects the inhalation action A1 or A2, the sensor 13 transmits a sensing signal MIC to the controller 151. Based on the sensing signal, the controller 151 enables a timer to count duration of the sensing signal MIC. When the duration reaches a threshold TN2, the controller 151 stops generating the signal PWM-EN, so that the output detecting circuit 152 stops outputting a power to the conductive component 11. The heating component 5 stops outputting a power.

The vaporization device 100 may set a light emitting mode of the light-emitting component 155 using a combination of the controller 151, the sensor 13, and the light-emitting component 155 according to an inhalation action of a user.

In some embodiments, when the sensor 13 detects the inhalation action A1 or A2, the sensor 13 transmits a sensing signal MIC to the controller 151. Based on the sensing signal, the controller 151 enables a timer to count duration of the sensing signal MIC. When the duration reaches a threshold TN2, the pin 151-12 of the controller 151 outputs a light-emitting warning signal WL1 to the light-emitting component 155, and the light emitted by the light-emitting component 155 is visible through the light-transmissive component 221. In some embodiments, the light-emitting warning signal has intensity changing over time, so that the light-emitting component 155 emits light with intensity changing over time. In some embodiments, the light-emitting warning signal is a pulse signal. In some embodiments, the light-emitting warning signal may be a pulse signal with a frequency of 1 Hz. In some embodiments, the light-emitting diode 155-D3 of the light-emitting component 155 emits red light. In some embodiments, the light-emitting diode 155-D3 emits red blinking light.

In some embodiments, the threshold TN2 is in a range of 3 seconds to 7 seconds. In some embodiments, the threshold TN2 is in a range of 4 seconds to 6 seconds. In some embodiments, the threshold TN2 is 5 seconds.

Stopping heating when the heating component 5 continuously performs heating for a time reaching the threshold TN2 can prevent the heating component 5 from overheating. Overheating of the heating component 5 may cause damage to other components inside the vaporization device 100. Overheating of the heating component 5 may reduce lives of the components inside the vaporization device 100. Stopping heating when the heating component 5 continuously performs heating for a time reaching the threshold TN2 can prevent the heating component 5 from dry burning. Dry burning of the heating component 5 may generate a scorching smell. Dry burning of the heating component 5 may generate toxic substances.

### Discharge Power Display

The vaporization device 100 detects the output signal BAT+ of the power supply component 20 and supplies a user warning, which may be performed using a combination of the controller 151, the output detecting circuit 152, the sensor 13, the power supply component 20, and the light-emitting component 155.

In some embodiments, the pin 151-5 of the controller 151 receives the output signal BAT+ of the power supply component 20 through a resistor 151-R1. The controller 151 detects the output signal BAT+ of the power supply component received through the pin 151-5.

When the controller 151 receives the sensing signal MIC from the sensor 13, if the output signal BAT+ is lower than a threshold TN3, the pin 151-12 of the controller 151 may output a light-emitting warning signal WL2 to the light-emitting component 155. The light emitted by the light-emitting component 155 is visible through the light-transmissive component 221. In some embodiments, the light-emitting diode 155-D3 of the light-emitting component 155 emits red light.

When the controller 151 receives the sensing signal MIC from the sensor 13, if the output signal BAT+ is higher than a threshold TN3, the pin 151-13 of the controller 151 may output a light emitting enable signal L3 to the light-emitting component 155. The light emitted by the light-emitting component 155 is visible through the light-transmissive component 221. In some embodiments, the light-emitting diode 155-D4 of the light-emitting component 155 emits white light.

In some embodiments, the threshold TN3 is in a range of 3.5 Volts (V) to 4.0 V. In some embodiments, the threshold TN3 may be 3.75 V.

### Low Voltage Detection

In some embodiments, when the controller 151 receives the sensing signal MIC from the sensor 13, if the output signal BAT+ is lower than a threshold TN4, the pin 151-20 of the controller 151 may stop outputting the enable signal to the output detecting circuit 152. The output detecting circuit 152 stops providing the output signal for the conductive component 11. The conductive component stops transmitting the output signal to the heating component 5. The heating component 5 stops outputting a power.

In some embodiments, when the controller 151 receives the sensing signal MIC from the sensor 13, if the output signal BAT+ is lower than the threshold TN4, the pin 151-12 of the controller 151 may output a light-emitting warning signal WL3 to the light-emitting component 155. The light emitted by the light-emitting component 155 is visible through the light-transmissive component 221. In some embodiments, the light-emitting warning signal has intensity changing over time, so that the light-emitting component 155 emits light with intensity changing over time. In some embodiments, the light-emitting warning signal is a pulse signal. In some embodiments, the light-emitting warning signal may be a pulse signal with a frequency of 2 Hz. In some embodiments, the light-emitting diode 155-D3 of the light-emitting component 155 emits red light. In some embodiments, the light-emitting diode 155-D3 emits red blinking light. In some embodiments, the light-emitting diode 155-D3 emits red blinking light three times.

In some embodiments, the threshold TN4 is in a range of 3.0 Volts (V) to 3.4V. In some embodiments, the threshold TN4 may be 3.2V.

In some embodiments, when the power supply component 20 outputs a power through the output detecting circuit 152 to generate thermal energy in the heating line, the controller 151 detects the output signal BAT+ of the power supply component received through the pin 151-5.

During power output, when the output signal BAT+ is lower than a threshold TN5, the pin 151-20 of the controller 151 stops outputting the enable signal to the output detecting circuit 152. The output detecting circuit 152 stops providing the output signal for the conductive component 11. The conductive component stops transmitting the output signal to the heating component 5. The heating component 5 stops outputting a power.

During power output, when the output signal BAT+ is lower than the threshold TN5, the pin 151-12 of the controller 151 may output a light-emitting warning signal WL3 to the light-emitting component 155. The light emitted by the light-emitting component 155 is visible through the light-transmissive component 221. In some embodiments, the light-emitting warning signal has intensity changing over time, so that the light-emitting component 155 emits light with intensity changing over time. In some embodiments, the light-emitting warning signal is a pulse signal. In some embodiments, the light-emitting warning signal may be a pulse signal with a frequency of 2 Hz. In some embodiments, the light-emitting diode 155-D3 of the light-emitting component 155 emits red light. In some embodiments, the light-emitting diode 155-D3 emits red blinking light. In some embodiments, the light-emitting diode 155-D3 emits red blinking light ten times.

In some embodiments, the threshold TN5 is in a range of 2.6 V to 3.0 V. In some embodiments, the threshold TN5 may be 2.8 V.

### Automatic Sleep

When duration in which the vaporization device 100 detects no inhalation action reaches a threshold TN6, the vaporization device 100 may be triggered by the controller 151 to enter a standby state.

In some embodiments, when the sensor 13 stops detecting an inhalation action, transmitting a sensing signal to the pin 151-7 of the controller 151 is stopped. The controller 151 enables a timer to count duration in which a sensor signal is not received. When the duration reaches the threshold TN6, the controller 151 enables a low power consumption mode. In the standby state, the sensor 13 maintains to be active. In some embodiments, when the controller 151 enables the low power consumption mode, the vaporization device enters a standby state.

In some embodiments, the threshold TN1 is in a range of 15 seconds to 35 seconds. In some embodiments, the threshold TN1 is in a range of 20 seconds to 30 seconds. In some embodiments, the threshold TN6 may be 25 seconds.

### Load System with Low or High Resistance Protection

A normal working load range of an output system of the vaporization device 100 may be in an impedance range of Z1 to Z2. In some embodiments, the impedance Z1 may be 0.7 ohms. In some embodiments, the impedance Z2 may be 2.5 ohms. The output system includes the heating component 5. The output system includes the conductive component 11. The vaporization device 100 may detect a load of the output system. If the load exceeds the normal working load range, a load abnormality protection mode is enabled to stop providing a signal to the output system and generate a warning signal.

In some embodiments, the load abnormality protection mode may be enabled using a combination of the controller 151, the output detecting circuit 152, the conductive component 11, the sensor 13, and the light-emitting component 155.

In some embodiments, when the sensor 13 detects the inhalation action A1 or A2, the sensor 13 transmits a sensing signal MIC to the controller 151. Based on the sensing signal, the pin 151-16 of the controller 151 may provide a load detection enable signal R-DET-EN to the output detecting circuit 152.

In some embodiments, a gate of a transistor 151-Q1 of the output detecting circuit 152 receives the load detection enable signal R-DET-EN. The transistor 151-Q1 is enabled to detect a voltage drop of the sampling resistor 152-R5. In some embodiments, the sampling resistor 152-R5 may be connected in series to a load system (not shown). A load impedance of the load system may be obtained by detecting a current drop and the voltage drop of the sampling resistor 152-R5.

In some embodiments, the output detecting circuit 152 may detect an impedance value of the load system (such as the heating component 5 or the heating line 51) through the conductive component 11. The conductive pins 11p1 and 11p2 of the conductive component 11 may be electrically connected to the load system (such as the heating component 5 or the heating line 51). In some embodiments, the output detecting circuit 152 may provide a detection signal associated with an impedance between the conductive pin 11p1 and the conductive pin 11p2.

In some embodiments, a voltage of a node N1 of the output detecting circuit 152 is associated with the voltage drop of the sampling resistor 152-R5. A voltage of the circuit node N1 is associated with the impedance of the load system. The resistor 152-R11 and the resistor 152-R13 form a voltage dividing circuit. An end of the voltage dividing circuit is connected to the node N1. A node N2 in the voltage dividing circuit is connected to the pin 152-4 of the output detecting circuit 152. A divided voltage of the voltage of the circuit node N1 is supplied to the pin 152-4 of the output detecting circuit 152 through the node N2 of the voltage dividing circuit. The pin 152-4 of the output detecting circuit 152 may output a load detection signal R-DET associated with the voltage of the circuit node N1. In some embodiments, the pin 152-4 of the output detecting circuit 152 may output a load detection signal R-DET associated with the impedance of the load system. In some embodiments, the load detection signal R-DET is output to the pin 151-17 of the controller 151. In some embodiments, the load detection signal R-DET may be a voltage signal. In some embodiments, the load detection signal R-DET may be a current signal.

In some embodiments, the sampling resistor 152-R5 is connected to the output 152-5 of the output detecting circuit 152 through the resistor 152-R3. The output 152-5 may output a load current signal I-DET associated with a current of the sampling resistor 152-R5. The load current signal I-DET is output to the pin 151-19 of the controller 151. In some embodiments, the current detection signal I-DET may be a voltage signal. In some embodiments, the current detection signal I-DET may be a current signal.

In some embodiments, the controller 151 receives the load detection signal R-DET and the load current signal I-DET. In some embodiments, the impedance of the load system may be obtained by the controller 151 based on the load detection signal R-DET and the load current signal I-DET.

In some embodiments, when the load detection signal R-DET is greater than a threshold SP1, the controller 151 controls the power supply component 20 to stop providing the power to the heating component 5. In some embodiments, when the load detection signal R-DET is less than a threshold value SP2, the controller 151 controls the power supply component 20 to stop providing the power to the heating component 5. In some embodiments, when the load current signal I-DET is greater than a threshold SP3, the controller 151 controls the power supply component 20 to stop providing the power to the heating component 5. In some embodiments, when the load current signal I-DET is less than a threshold SP4, the controller 151 controls the power supply component 20 to stop providing the power to the heating component 5.

In some embodiments, when the impedance of the load system exceeds the impedance range of Z1 to Z2 (greater than the impedance Z2 or less than the impedance Z1), the pin 151-20 of the controller 151 stop providing the enable signal to the output detecting circuit 152. The output detecting circuit 152 stops providing the output signal for the conductive component 11. The conductive component stops transmitting the output signal to the heating component 5. The heating component 5 stops outputting a power. In some embodiments, when the impedance of the load system exceeds a normal operating impedance range, the controller 151 controls the power supply component 20 to stop providing the power to the heating component 5.

In some embodiments, when the impedance of the load system exceeds the normal working impedance range, the pin 151-12 of the controller 151 may output a light-emitting warning signal WL4 to the light-emitting component 155. The light emitted by the light-emitting component 155 is visible through the light-transmissive component 221. In some embodiments, the light-emitting warning signal has intensity changing over time, so that the light-emitting component 155 emits light with intensity changing over time. In some embodiments, the light-emitting warning signal is a pulse signal. In some embodiments, the light-emitting warning signal may be a pulse signal with a frequency of 2 Hz. In some embodiments, the light-emitting diode 155-D3 of the light-emitting component 155 emits red light. In some embodiments, the light-emitting diode 155-D3 emits red blinking light. In some embodiments, the light-emitting diode 155-D3 emits red blinking light three times.

In some embodiments, that the load impedance of the load system exceeds the normal working impedance range may be that the cartridge 100A is not normally engaged with the body 100B. In some embodiments, that the load impedance of the load system exceeds the normal operating impedance range may be a short circuit in the load system.

When the impedance of the load system (such as the heating component 5) is abnormal, the load system may be abnormally heated, and therefore the load system may overheat, causing harm to a user. Alternatively, the load system may fail to be heated normally to increase the temperature, and therefore e-liquid fails to generate aerosol in the vaporization chamber 40, resulting in incomplete combustion and endangering the user. Enabling the load abnormality protection mode can prevent the power supply component from outputting a power to a load system that exceeds a normal impedance range, thereby effectively reducing a probability of causing harm to a user.

### Over-smoking Reminder (Vibration Reminder)

The vaporization device 100 may warn a user to avoid excessive smoking within a short time period that may cause harm to a user, for example, stinging, breathing difficulty, etc. In some embodiments, the warning function may be performed using a combination of the controller 151, the output detecting circuit 152, the sensor 13, a flat cable 16, the vibrator 17, and the light-emitting component 155.

In some embodiments, when the sensor 13 detects an inhalation action, the sensor 13 transmits a sensing signal to the controller 151, and the controller enables a counter to record times the sensing signal is received. When times of the counter reach a threshold TN7, the pin 151-15 of the controller 151 outputs a vibration enable signal MOTO-EN to be transmitted to the vibrator 17 through the flat cable 16.

In some embodiments, duration of each inhalation action needs to exceed preset duration, and the controller 151 considers the inhalation action as valid and causes the counter to record the inhalation action. If the inhalation action does not last longer than the preset duration, the counter ignores the inhalation action.

In some embodiments, the preset time is in a range of 0.7 seconds to 1.3 seconds. In some embodiments, the preset time may be 1 second. In some embodiments, the threshold TN7 may be in a range of 10 to 20. In some embodiments, the threshold TN7 may be 15.

In some embodiments, the base of the transistor 17-Q5 of the vibrator 17 receives the vibration enable signal MOTO-EN through the resistor 17-R24. The transistor 17-Q5 is turned on to enable a motor (not shown) of the vibrator 17.

In some embodiments, motor vibration duration of the vibrator 17 may be in a range of 50 milliseconds to 200 milliseconds. In some embodiments, the motor vibration duration of the vibrator 17 may be 100 milliseconds.

### Over Temperature Protection of Battery Cell in Use

The vaporization device 100 may control the temperature of the power supply component 20. When the temperature of the power supply component 20 is greater than a threshold TN8, the vaporization device enters a standby mode. The temperature of the power supply component 20 may be effectively restored to a normal operating temperature. The power supply component 20 is prevented from being damaged as a result of operating at an abnormal temperature.

In some embodiments, controlling a temperature of the battery cell may be performed by a combination of the controller 151, the temperature detecting circuit 153, and the light-emitting component 155.

In some embodiments, the pin 151-6 of the controller 151 supplies a temperature detection signal NTC-VCC to the temperature detecting circuit 153. The thermistor 153-R17 of the temperature detecting circuit 153 receives the temperature detection signal NTC-VCC, and the other end of the thermistor outputs a temperature signal NTC-DET. In some embodiments, the temperature signal NTC-DET is associated with an impedance of the thermistor. In some embodiments, the temperature signal NTC-DET may be a voltage signal. In some embodiments, the temperature signal NTC-DET may be a current signal.

In some embodiments, when the thermistor 155-R17 is an NTC thermistor, a higher temperature of the power supply component 20 brings a lower thermistor resistance, leading to a larger temperature signal NTC-DET. In some embodiments, when the thermistor 155-R17 is a PTC thermistor, a higher temperature of the power supply component 20 brings a higher thermistor resistance, leading to a smaller temperature signal NTC-DET. The pin 151-1 of the controller 151 receives the temperature signal NTC-DET. In some embodiments, the thermistor 155-R17 may be in contact with the power supply component 20. In some embodiments, the thermistor 155-R17 may exchange heat with the power supply component 20. In some embodiments, the temperature signal NTC-DET is associated with the temperature of the power supply component 20.

In some embodiments, the controller 151 determines the temperature of the power supply component 20 based on the temperature detection signal NTC-VCC and the temperature signal NTC-DET.

In some embodiments, when the temperature signal NTC-DET is greater than a threshold SP5, the sensor 13 stops detecting an inhalation action, and then the controller 151 enables a low power consumption mode, and the vaporization device 100 enters a standby state. When the vaporization device is in the standby state, the sensor 13 maintains to be active.

In some embodiments, when the temperature of the power supply component 20 is greater than the threshold TN8, the sensor 13 stops detecting an inhalation action, and then the controller 151 enables a low power consumption mode, and the vaporization device 100 enters a standby state. When the vaporization device is in the standby state, the sensor 13 maintains to be active.

In some embodiments, when the temperature of the battery cell is greater than the threshold TN8, the sensor 13 stops detecting an inhalation action, and then the pin 151-13 of the controller 151 may output a light emitting enable signal L3 to the light-emitting component 155. The light emitted by the light-emitting component 155 is visible through the light-transmissive component 221. In some embodiments, the light emitting enable signal L3 has intensity changing over time, so that the light-emitting component 155 emits light with intensity changing over time. In some embodiments, the light-emitting warning signal is a pulse signal. In some embodiments, the light emitting enable signal L3 may be a pulse signal with a frequency of 2Hz. In some embodiments, the light-emitting diode 155-D4 of the light-emitting component 155 emits white light. In some embodiments, the light-emitting diode 155-D3 emits white blinking light. In some embodiments, the light-emitting diode 155-D3 emits white blinking light three times.

In some embodiments, the threshold TN8 is in a range of 60 degrees celsius to 70 degrees celsius. In some embodiments, the threshold TN8 may be 60 degrees celsius.

The vaporization device 100 may control the temperature of the power supply component 20. When the temperature of the power supply component 20 is less than the threshold TN8, the vaporization device enters a standby mode. The temperature of the power supply component 20 may be effectively restored to a normal operating temperature. The power supply component 20 is prevented from being damaged as a result of operating at an abnormal temperature.

In some embodiments, when the temperature of the power supply component 20 is less than the threshold TN8, if the sensor 13 detects another inhalation action, the controller 151 enables a low power consumption mode, and the vaporization device enters a standby state. When the vaporization device is in the standby state, the sensor 13 maintains to be active.

In some embodiments, when the temperature of the power supply component 20 is less than the threshold TN8, the sensor 13 stops detecting an inhalation action, and then the pin 151-13 of the controller 151 may output a light emitting enable signal L3 to the light-emitting component 155. The light emitted by the light-emitting component 155 is visible through the light-transmissive component 221. In some embodiments, the light emitting enable signal L3 has intensity changing over time, so that the light-emitting component 155 emits light with intensity changing over time. In some embodiments, the light-emitting warning signal is a pulse signal. In some embodiments, the light emitting enable signal L3 may be a pulse signal with a frequency of 2Hz. In some embodiments, the light-emitting diode 155-D4 of the light-emitting component 155 emits white light. In some embodiments, the light-emitting diode 155-D3 emits white blinking light. In some embodiments, the light-emitting diode 155-D3 emits white blinking light three times.

In some embodiments, the threshold TN8 is in a range of -20 degrees celsius to 0 degrees celsius. In some embodiments, the threshold TN8 may be -10 degrees celsius.

### Over Temperature Protection of Battery Cell during Charging

The vaporization device 100 may detect the temperature of the power supply component 20. When the power supply component 20 is charged through the charging component 18, if the temperature of the power supply component 20 is greater than a threshold TN9, the power supply component 20 stops charging, and the controller 151 enters a standby mode. The temperature of the power supply component 20 may be effectively restored to a normal operating temperature. The power supply component 20 is prevented from being damaged as a result of charging at an abnormal temperature.

In some embodiments, controlling the temperature of the battery cell may be performed by a combination of the controller 151, the temperature detecting circuit 153, the charge protecting circuit 156, the charge management circuit 157, and the light-emitting component 155.

In some embodiments, the pin 151-6 of the controller 151 supplies a temperature detection signal NTC-VCC to the temperature detecting circuit 153. The thermistor 153-R17 of the temperature detecting circuit 153 receives the temperature detection signal NTC-VCC, and the other end of the thermistor outputs a temperature signal NTC-DET. The temperature signal NTC-DET is associated with the impedance of the thermistor. When the thermistor 155-R17 is an NTC thermistor, a higher temperature brings a lower thermistor resistance, leading to a larger temperature signal NTC-DET. When the thermistor 155-R17 is a PTC thermistor, a higher temperature brings a higher thermistor resistance, leading to a smaller temperature signal NTC-DET. The pin 151-1 of the controller 151 receives the temperature signal NTC-DET. In some embodiments, the thermistor 155-R17 is in contact with the power supply component 20.

In some embodiments, the controller 151 determines the temperature of the power supply component 20 based on the temperature detection signal NTC-VCC and the temperature signal NTC-DET.

In some embodiments, during charging of the power supply component 20, if the temperature of the power supply component 20 is greater than the threshold TN9, the controller stops providing the charging enable signal CHG EN to the charge protecting circuit 156, and the charge protecting circuit 156 stops providing the charging signal VCC CHG to the charge management circuit 157, so that the charge management circuit 157 stops charging the power supply component 20. In some embodiments, during charging of the power supply component 20, if the temperature of the power supply component 20 is greater than the threshold TN9, the charge management circuit 157 stops charging the power supply component 20.

In some embodiments, when the temperature of the power supply component 20 is greater than the threshold TN9, the controller 151 enables the low power consumption mode, and the vaporization device 100 enters a standby state. In the standby state, the sensor 13 maintains to be active.

In some embodiments, when the temperature of the power supply component 20 is greater than a threshold TN9, the sensor 13 stops detecting an inhalation action, and then the pin 151-13 of the controller 151 may output a light emitting enable signal L3 to the light-emitting component 155. The light emitted by the light-emitting component 155 is visible through the light-transmissive component 221. In some embodiments, the light emitting enable signal L3 has intensity changing over time, so that the light-emitting component 155 emits light with intensity changing over time. In some embodiments, the light-emitting warning signal is a pulse signal. In some embodiments, the light emitting enable signal L3 may be a pulse signal with a frequency of 2Hz. In some embodiments, the light-emitting diode 155-D4 of the light-emitting component 155 emits white light. In some embodiments, the light-emitting diode 155-D3 emits white blinking light. In some embodiments, the light-emitting diode 155-D3 emits white blinking light three times.

In some embodiments, the threshold TN9 is in a range of 60 degrees celsius to 70 degrees celsius. In some embodiments, the threshold TN9 may be 60 degrees celsius.

The vaporization device 100 may detect the temperature of the power supply component 20. During charging of the power supply component 20, if the temperature of the power supply component 20 is less than the threshold TN9, the atomization device stops charging and enters a standby mode. The temperature of the power supply component 20 may be effectively restored to a normal operating temperature. The power supply component 20 is prevented from being damaged as a result of charging at an abnormal temperature.

In some embodiments, during charging of the vaporization device, if the temperature of the power supply component 20 is less than the threshold TN9, the controller stops providing the charging enable signal CHG EN to the charge protecting circuit 156, and the charge protecting circuit 156 stops providing the charging signal VCC CHG to the charge management circuit 157, so that the charge management circuit 157 stops charging the power supply component 20. In some embodiments, when the temperature of the power supply component 20 is less than the threshold TN9, the controller 151 enables the low power consumption mode, and the vaporization device enters a standby state. In the standby state, the sensor 13 maintains to be active.

In some embodiments, when the temperature of the power supply component 20 is less than the threshold TN9, the sensor 13 stops detecting an inhalation action, and then the pin 151-13 of the controller 151 may output a light emitting enable signal L3 to the light-emitting component 155. The light emitted by the light-emitting component 155 is visible through the light-transmissive component 221. In some embodiments, the light emitting enable signal L3 has intensity changing over time, so that the light-emitting component 155 emits light with intensity changing over time. In some embodiments, the light-emitting warning signal is a pulse signal. In some embodiments, the light emitting enable signal L3 may be a pulse signal with a frequency of 2Hz. In some embodiments, the light-emitting diode 155-D4 of the light-emitting component 155 emits white light. In some embodiments, the light-emitting diode 155-D4 emits white blinking light. In some embodiments, the light-emitting diode 155-D4 emits white blinking light three times.

In some embodiments, the threshold TN9 is in a range of -10 degrees celsius to 0 degrees celsius. In some embodiments, the threshold TN9 may be 0 degrees celsius.

### Charging Current

The vaporization device 100 may charge the power supply component 20 using an external signal VIN. In some embodiments, the external signal may be received through the charging component 18. The vaporization device may charge the power supply component 20 with different charging currents, so that a charging time may be effectively shortened, a life of the power supply component 20 is prolonged, and harm is prevented from being caused to a user as a result of overheating of the power supply component 20.

In some embodiments, a charging current may be set for the vaporization device by a combination of the controller 151, the temperature detecting circuit 153, the charge detecting circuit 154, the charge protecting circuit 156, the charge management circuit 157, the flat cable 16, and the light-emitting component 18.

In some embodiments, the charging component 18 receives the external signal VIN, and supplies the external signal VIN to the pin 154-1 of the charge detecting circuit 154 through the flat cable 16. The charge detecting circuit 154 supplies a charge detection signal CHARG-DET to the pin 151-2 of the controller 151 through the pin 154-2. The controller 151 supplies a charging enable signal CHG_EN to the pin 156-1 of the charge protecting circuit 156. The transistor 153-Q3A receives the charging enable signal CHG EN to enable the transistor 156-Q4. The transistor 156-Q4 supplies a charging signal VCC_CHG associated with the external signal VIN to the charge management circuit 157 based on the signal of the transistor 153-Q3A. A charging chip 157-MCU of the charge management circuit 157 receives the charging signal VCC CHG, and charges the power supply component 20 based on the temperature of the power supply component 20.

In some embodiments, the charging circuit including the charge protecting circuit 156 and the charge management circuit 157 receives the charging enable signal CHG EN to charge the power supply component 20.

In some embodiments, the controller 151 determines the temperature of the power supply component 20 based on the temperature detection signal NTC-VCC and the temperature signal NTC-DET from the temperature detecting circuit 153.

When the temperature of the power supply component 20 is in a temperature range K1, the charging chip 157-MCU supplies the charging current I1 to the power supply component 20.

When the temperature of the power supply component 20 is in a temperature range K2, the pin 151-10 of the controller 151 supplies a current setting signal ISET1, and the charging chip 157-MCU receives the current setting signal ISET1 through the resistor 157-R4. The charging chip 157-MCU supplies a charging current 12 to the power supply component 20 based on the current setting signal ISET1.

When the temperature of the power supply component 20 is in a temperature range K3, the pin 151-11 of the controller 151 supplies a current setting signal ISET2, and the charging chip 157-MCU receives the current setting signal ISET2 through the resistor 157-R6. The charging chip 157-MCU supplies a charging current 13 to the power supply component 20 based on the current setting signal ISET2.

When the temperature of the power supply component 20 is in a temperature range K4, the pin 151-10 of the controller 151 supplies a current setting signal ISET1, and the charging chip 157-MCU receives the current setting signal ISET1 through the resistor 157-R4. The charging chip 157-MCU supplies a charging current 12 to the power supply component 20 based on the current setting signal ISET1.

When the charging chip 157-MCU is charging the power supply component 20, after the temperature of the power supply component 20 changes from a temperature range K4 to the temperature range K1, K2 or K3, the controller 151 continues providing the current setting signal ISET1 and maintains the charging current 12.

In some embodiments, the temperature range K1 is less than the temperature range K2. In some embodiments, the temperature range K2 is less than the temperature range K3. In some embodiments, the temperature range K3 is less than the temperature range K4. In some embodiments, the temperature range K1 may be in a range of 0 to 10 degrees celsius. In some embodiments, the temperature range K2 may be in a range of 10 to 18 degrees celsius. In some embodiments, the temperature range K1 may be in a range of 18 to 45 degrees celsius. In some embodiments, the temperature range K4 may be in a range of 45 to 60 degrees celsius.

In some embodiments, the charging current I1 may be in a range of 20 to 120 milliamps. In some embodiments, the charging current I1 may be 70 milliamps. In some embodiments, the charging current 12 may be in a range of 125 to 225 milliamps. In some embodiments, the charging current 12 may be 500 milliamps. In some embodiments, the charging current 13 may be in a range of 450 to 550 milliamps. In some embodiments, the charging current 13 may be 500 milliamps.

### Charging State

The vaporization device 100 may charge the power supply component 20 using an external signal. The vaporization device may provide a reminder signal to a user to determine whether the power supply component is in a charging state.

In some embodiments, the charging state may be reminded using a combination of the controller 151, the charge detecting circuit 154, the charge protecting circuit 156, the charge management circuit 157, the flat cable 16, the vibrator 17, the charging component 18, and the light-emitting component 155.

In some embodiments, the charging component 18 receives the external signal VIN, detects and supplies a charging detection signal CHARG-DET to the controller 151 through the charge detecting circuit 154, and the controller 151 supplies a vibration enable signal MOTO-EN based on the charging detection signal CHARG-DET. The vibration enable signal is transmitted to the vibrator 17 through the flat cable 16 to enable the motor (not shown) of the vibrator 17.

In some embodiments, motor vibration duration of the vibrator 17 may be in a range of 50 milliseconds to 200 milliseconds. In some embodiments, the motor vibration duration of the vibrator 17 may be 100 milliseconds.

In some embodiments, the charging component 18 receives the external signal VIN, and detects and supplies a charging detection signal CHARG-DET to the controller 151 through the charge detecting circuit. The controller 151 supplies a light-emitting enable signal L5 to the light-emitting component 155 based on the charging detection signal CHARG-DET. In some embodiments, the light emitting enable signal L5 has intensity changing over time, so that the light-emitting component 155 emits light with intensity changing over time. In some embodiments, the intensity of the light-emitting enable signal L5 gradually increases over time. The intensity of the light emitted by the light-emitting component 155 gradually increases over time. In some embodiments, the intensity of the light emitted by the light-emitting component 155 gradually decreases over time. In some embodiments, when the time increases to the preset time, the intensity of the light emitting signal gradually decreases over time until the light emitting signal disappears. In some embodiments, the preset time is in a range of 1 second to 3 seconds. In some embodiments, the preset time may be 2 seconds. In some embodiments, the white-light-emitting diode 155-D4 of the light-emitting component 154 emits white light. The light emitted by the light-emitting component 155 is visible through the light-transmissive component 221.

In some embodiments, during the charging of the power supply component 20, the light emitting mode based on the light-emitting enable signal L5 in the foregoing embodiment may be repeated.

In some embodiments, the charge management circuit supplies a charging status signal CHG-STAT to the controller, and the controller determines, based on the charging status signal CHG-STAT, whether the charging of the power supply component 20 is completed. In some embodiments, when the controller determines that the charging of the power supply component 20 is completed, the controller stops providing the light emitting enable signal L5 to the light-emitting component 155. The light-emitting component 155 stops emitting light.

### Normal Smoking during Charging

A user may use the vaporization device while the power supply component 20 is being charged. Convenience and real-time experience can be supplied to a user. In addition, charging is temporarily stopped during use by the user to prevent the user from being harmed as a result of overheating of the power supply component.

In some embodiments, during charging of the power supply component 20, if the sensor 13 detects an inhalation action, the sensor 13 may provide a sensing signal to the controller 151. The controller 151 enables the power output mode in the foregoing embodiment based on the sensing signal, so that the power supply component 20 outputs a power P1, P2, P3, P4, or P5 to the heating component.

In some embodiments, during charging of the power supply component 20, if the sensor 13 detects an inhalation action, the sensor 13 may provide a sensing signal to the controller 151. The controller 151 stops providing the charging enable signal CHG_EN to the charge protecting circuit 156. The charge protecting circuit 156 stops providing the charging signal VCC CHG to the charge management circuit 157. The charge management circuit 157 stops charging the power supply component 20.

In some embodiments, during charging of the power supply component 20, if the sensor 13 detects an inhalation action, the sensor 13 may provide a sensing signal to the controller 151. The controller 151 stops providing the charging enable signal CHG_EN to the charging circuit to stop charging the power supply component 20.

In some embodiments, during charging of the power supply component 20, if the sensor 13 detects an inhalation action, the controller 151 does not supply the charging enable signal CHG EN to the charge protecting circuit 156 to skip charging the power supply component 20.

### Charging Failure State

When providing of the external signal VIN to the charging component 18 is stopped, the charging of the power supply component 20 is stopped.

In some embodiments, a charging current may be for the vaporization device by a combination of the controller 151, the charge detecting circuit 154, the charge protecting circuit 156, the charge management circuit 157, the flat cable 16, the charging component 18, and the light-emitting component 155.

In some embodiments, when providing of the external signal VIN to the charging component 18 is stopped, the charge protecting circuit 156 stops providing the charging signal VCC_CHG to the charge management circuit 157 as a result of receiving no external signal VIN, so that the charge management circuit 157 stops charging the power supply component 20.

In some embodiments, when providing of the external signal VIN to the charging component 18 is stopped, the charge detecting circuit 154 stops providing the charging detection signal CHARG-DET to the controller 151. In some embodiments, the controller 151 stops providing the charging enable signal CHG_EN to the charge protecting circuit 156, and the charge protecting circuit 156 stops providing the charging signal VCC CHG to the charge management circuit 157, so that the charge management circuit 157 stops charging the power supply component 20.

In some embodiments, when providing of the external signal VIN to the charging component 18 is stopped, the controller 151 does not supply the charging enable signal CHG_EN to the charge protecting circuit 156 to skip charging the power supply component 20.

In some embodiments, when providing of the external signal VIN to the charging component 18 is stopped, the charge detecting circuit stops providing the charging detection signal CHARG-DET to the controller 151. The pin 151-13 of the controller 151 supplies a light emitting enable signal L4 to the light-emitting component 155, and light emitted by the light-emitting component 155 is visible through the light-transmissive component 221. In some embodiments, the light emitting enable signal L4 has intensity changing over time, so that the light-emitting component 155 emits light with intensity changing over time. In some embodiments, the light-emitting warning signal is a pulse signal. In some embodiments, the light emitting enable signal L3 may be a pulse signal with a frequency of 1 Hz. In some embodiments, the light-emitting diode 155-D4 of the light-emitting component 155 emits white light. In some embodiments, the light-emitting diode 155-D4 emits white blinking light. In some embodiments, the light-emitting diode 155-D4 emits white blinking light three times.

In some embodiments, when the external signal VIN is supplied to the charging component 18 again, the temperature range of the power supply component 20 is determined according to the foregoing embodiment to re-enable the charging of the power supply component 20.

### Low Voltage Protection of Battery Cell

The vaporization device may detect a state of the power supply component 20. If the voltage of the power supply component 20 is excessively low, a low voltage protection mode is enabled to prevent charging, so as to avoid danger during charging and prevent a user from being harmed.

In some embodiments, the controller 151, the charge detecting circuit 154, the light-emitting component 155, and the charging component 18 may be used in combination.

In some embodiments, when the charging component 18 receives the external signal VIN, if the output signal BAT+ of the power supply component is lower than a threshold TN10, the controller 151 does not supply the charging enable signal CHG EN to the charge protecting circuit 156.

In some embodiments, when the charging component 18 receives the external signal VIN, if the output signal BAT+ of the power supply component is lower than the threshold TN10, the pin 151-12 of the controller 151 outputs a light-emitting warning signal WL4 to the light-emitting component 155, and light emitted by the light-emitting component 155 is visible through the light-transmissive component 221. In some embodiments, the light-emitting warning signal has intensity changing over time, so that the light-emitting component 155 emits light with intensity changing over time. In some embodiments, the light-emitting warning signal is a pulse signal. In some embodiments, the light-emitting warning signal may be a pulse signal with a frequency of 2Hz. In some embodiments, the red-light-emitting diode 155-D3 of the light-emitting component 155 emits red light. In some embodiments, the red-light-emitting diode 155-D3 emits red blinking light.

In some embodiments, the threshold TN10 may be in a range of 2.0V to 3.0V. In some embodiments, the threshold TN10 may be 2.5V.

### Overvoltage Protection and Undervoltage Protection during Charging

The vaporization device may detect an external signal VIN. If the external signal exceeds a normal range, an overvoltage protection mode or an undervoltage protection mode is enabled to prevent the power supply component 20 from being damaged as a result of an excessively high or low external signal VIN.

In some embodiments, the overvoltage protection mode and the undervoltage protection mode may be performed by a combination of the controller 151, the charge detecting circuit 154, and the light-emitting component 155.

In some embodiments, the charging component 18 receives the external signal VIN, and supplies the VIN to the pin 154-1 of the charge detecting circuit 154 through the flat cable 16. The charge detecting circuit 154 supplies a charge detection signal CHARG-DET to the pin 151-2 of the controller 151 through the pin 154-2. The controller 151 determines, based on the charge detection signal CHARG-DET, whether the external signal VIN exceeds a threshold TN11. If the external signal VIN exceeds the threshold TN11, the controller 151 does not supply the charging enable signal CHG EN to the charge protecting circuit 156 to skip charging the power supply component 20.

In some embodiments, the charging component 18 receives the external signal VIN. The charge detecting circuit 154 receives the external signal VIN to provide a charge detection signal CHARG-DET to the controller 151. If the external signal VIN exceeds the threshold TN11, the pin 151-13 of the controller 151 supplies a light emitting signal L6 to the light-emitting component 155, and light emitted by the light-emitting component 155 is visible through the light-transmissive component 221. In some embodiments, the light emitting signal L6 has intensity changing over time, so that the light-emitting component 155 emits light with intensity changing over time. In some embodiments, the light-emitting warning signal is a pulse signal. In some embodiments, the light emitting signal L6 may be a pulse signal with a frequency of 2 Hz. In some embodiments, the light-emitting diode 155-D4 of the light-emitting component 155 emits white light. In some embodiments, the light-emitting diode 155-D4 emits white blinking light. In some embodiments, the light-emitting diode 155-D4 emits white blinking light six times.

In some embodiments, the threshold TN11 may be in a range of 5.5 V to 6.5 V. In some embodiments, the threshold TN11 may be 5.7 V.

In some embodiments, the charging component 18 receives the external signal VIN. The charge detecting circuit 154 receives the external signal VIN to provide a charge detection signal CHARG-DET to the controller 151. The controller 151 determines, based on the charge detection signal CHARG-DET, whether the external signal VIN is lower than a threshold TN12. If the external signal VIN is lower than the threshold TN12, the controller 151 does not supply the charging enable signal CHG EN to the charge protecting circuit 156 to skip charging the power supply component 20.

In some embodiments, the charging component 18 receives the external signal VIN. The charge detecting circuit 154 receives the external signal VIN to provide a charge detection signal CHARG-DET to the controller 151. If the external signal VIN exceeds the threshold TN12, the pin 151-13 of the controller 151 supplies a light emitting signal L6 to the light-emitting component 155, and light emitted by the light-emitting component 155 is visible through the light-transmissive component 221. In some embodiments, the light emitting signal L6 has intensity changing over time, so that the light-emitting component 155 emits light with intensity changing over time. In some embodiments, the light-emitting warning signal is a pulse signal. In some embodiments, the light emitting signal L6 may be a pulse signal with a frequency of 2 Hz. In some embodiments, the light-emitting diode 155-D4 of the light-emitting component 155 emits white light. In some embodiments, the light-emitting diode 155-D4 emits white blinking light. In some embodiments, the light-emitting diode 155-D4 emits white blinking light three times.

In some embodiments, the threshold TN12 may be in a range of 3.5 V to 5 V. In some embodiments, the threshold TN12 may be 4.2 V.

### Overcharge Protection

The vaporization device may detect the voltage and the charging time of the power supply component 20 during the charging, so as to prevent the power supply component 20 from being damaged due to overcharging of the power supply component 20.

In some embodiments, the controller 151, the charge protecting circuit 156, the charge management circuit 157, and the light-emitting component 155 may be used in combination.

In some embodiments, when the charge management circuit 157 is charging the power supply component 20, the charge management circuit 157 supplies a charging status signal CHG-STAT to the controller 151, and the controller 151 determines, based on the charging status signal CHG-STAT, whether the voltage of the power supply component 20 exceeds a threshold TN13. In some embodiments, if the voltage of the power supply component 20 exceeds the threshold value TN13, the controller stops providing the charging enable signal CHG EN to the charge protecting circuit 156. The charge protecting circuit 15 stops providing the charging signal VCC CHG to the charge management circuit 157. The charge management circuit 157 stops charging the power supply component 20.

In some embodiments, if the voltage of the power supply component 20 exceeds the threshold value TN13, the controller 151 does not supply the charging enable signal CHG_EN to the charge protecting circuit 156 to skip charging the power supply component 20.

In some embodiments, if the voltage of the power supply component 20 exceeds the threshold TN13, the controller 151 stops providing the light emitting signal L5 to the light-emitting component 155 in the previous embodiment so that the light-emitting component 155 stops emitting light.

In some embodiments, the threshold TN13 may be in a range of 4.3 V to 4.4 V. In some embodiments, the threshold TN13 may be 4.35V.

In some embodiments, when the charge management circuit 157 is charging the power supply component 20, the controller enables a timer to count a charging time. When the charging time exceeds a threshold TN14, the controller stops providing the charging enable signal CHG EN to the charge protecting circuit 156. The charge protecting circuit 15 stops providing the charging signal VCC CHG to the charge management circuit 157. The charge management circuit 157 stops charging the power supply component 20.

In some embodiments, when the charging time exceeds the threshold TN14, the controller 151 does not supply the charging enable signal CHG EN to the charge protecting circuit 156 to skip charging the power supply component 20.

In some embodiments, if the voltage of the power supply component 20 exceeds the threshold TN12, the controller 151 stops providing the light emitting signal L5 to the light-emitting component 155 in the previous embodiment so that the light-emitting component 155 stops emitting light.

In some embodiments, the threshold TN14 may be in a range of 2.5 hours to 3.5 hours. In some embodiments, the threshold TN14 may be 3 hours.

As used herein, the terms "approximately," "substantially," "substantial" and "about" are used to describe and account for small variations. When used in conjunction with an event or circumstance, the terms can refer to instances in which the event or circumstance occurs precisely as well as instances in which the event or circumstance occurs to a close approximation. As used herein with respect to a given value or range, the term "about" generally means in the range of ±10%, ±5%, ±1%, or ±0.5% of the given value or range. The range may be expressed herein as being from one endpoint to another endpoint or between two endpoints. Unless otherwise specified, all ranges disclosed herein include endpoints. The term "substantially coplanar" may refer to two surfaces within a few micrometers (µm) positioned along a same plane, for example, within 10 µm, 5 µm, 1 µm, or 0.5 µm positioned along a same plane. When reference is made to "substantially" the same numerical value or characteristic, the term may refer to a value within ±10%, ±5%, ±1%, or ±0.5% of the average of the values.

As used herein, the terms "approximately," "substantially," "substantial," and "about" are used to describe and explain small variations. When used in conjunction with an event or circumstance, the terms can refer to instances in which the event or circumstance occurs precisely as well as instances in which the event or circumstance occurs to a close approximation. For example, when used in conjunction with a numerical value, the terms can refer to a range of variation less than or equal to ±10% of that numerical value, such as less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%. For example, if a difference between two values is less than or equal to ± 10% of an average of the values (for example, less than or equal to ±5%, less than or equal to ±4%, less than or equal to ±3%, less than equal to ±2%, less than or equal to ±1%, less than or equal to ±0.5%, less than or equal to ±0.1%, or less than or equal to ±0.05%), the two values may be considered to be "substantially" or "about" the same. For example, being "substantially" parallel may refer to an angular variation range of less than or equal to ±10° with respect to 0°, for example, less than or equal to ±5°, less than or equal to ±4°, less than or equal to ±3°, less than or equal to ±2°, less than or equal to ±1°, less than or equal to ±0.5°, less than or equal to ±0.1°, or less than or equal to ±0.05°. For example, being "substantially" perpendicular may refer to an angular variation range of less than or equal to ±10° with respect to 90°, for example, less than or equal to ±5°, less than or equal to ±4°, less than or equal to ±3°, less than or equal to ±2°, less than or equal to ±1°, less than or equal to ±0.5°, less than or equal to ±0.1°, or less than or equal to ±0.05°.

For example, if a displacement between two surfaces is equal to or less than 5 µm, equal to or less than 2 µm, equal to or less than 1 µm, or equal to or less than 0.5 µm, the two surfaces may be considered to be coplanar or substantially coplanar. If a displacement between any two points on a surface relative to a plane is equal to or less than 5 µm, equal to or less than 2 µm, equal to or less than 1 µm, or equal to or less than 0.5 µm, the surface may be considered to be flat or substantially flat.

As used herein, the terms "conductive," "electrically conductive" and "electrical conductivity" refer to an ability to transport an electric current. Electrically conductive materials typically indicate those materials that exhibit little or no opposition to the flow of an electric current. One measure of electrical conductivity is Siemens per meter (S/m). Typically, an electrically conductive material is one having a conductivity greater than approximately 10⁴ S/m, such as at least 10⁵ S/m or at least 10⁶ S/m. The electrical conductivity of a material can sometimes vary with temperature. Unless otherwise specified, the electrical conductivity of a material is measured at room temperature.

As used herein, the singular terms "a," "an", and "the" may include plural referents unless the context clearly dictates otherwise. In the description of some embodiments, components provided "on" or "above" another component may encompass a case in which a previous component is directly on a latter component (for example, in physical contact with the latter component), and a case in which one or more intermediate components are located between the previous component and the latter component.

As used herein, for ease of description, space-related terms such as "under", "below", "lower portion", "above", "upper portion", "lower portion", "left side", "right side", and the like may be used herein to describe a relationship between one component or feature and another component or feature as shown in the figures. In addition to orientation shown in the figures, space-related terms are intended to encompass different orientations of the device in use or operation. An apparatus may be oriented in other ways (rotated 90 degrees or at other orientations), and the space-related descriptors used herein may also be used for explanation accordingly. It should be understood that when a component is "connected" or "coupled" to another component, the component may be directly connected to or coupled to another component, or an intermediate component may exist.

As used in the present application, terms "approximately", "basically", "substantially", and "about" are used for describing and explaining a small variation. When being used in combination with an event or circumstance, the term may refer to a case in which the event or circumstance occurs precisely, and a case in which the event or circumstance occurs approximately. As used herein with respect to a given value or range, the term "about" generally means in the range of ±10%, ±5%, ±1%, or ±0.5% of the given value or range. The range may be indicated herein as from one endpoint to another endpoint or between two endpoints. Unless otherwise specified, all ranges disclosed herein include endpoints. The term "substantially coplanar" may refer to two surfaces within a few micrometers (µm) positioned along the same plane, for example, within 10 µm, within 5 µm, within 1 µm, or within 0.5 µm located along the same plane. When reference is made to "substantially" the same numerical value or characteristic, the term may refer to a value within ±10%, ±5%, ±1%, or ±0.5% of the average of the values.

Several embodiments of the present invention and features of details are briefly described above. The embodiments described in the present invention may be easily used as a basis for designing or modifying other processes and structures for realizing the same or similar objectives and/or obtaining the same or similar advantages introduced in the embodiments of the present invention. Such equivalent construction does not depart from the spirit and scope of the present invention, and various variations, replacements, and modifications can be made without departing from the spirit and scope of the present invention.

## Claims

1. A vaporization device, comprising:
a heating component;
a first conductive component configured to be electrically connected to the heating component;
a second conductive component configured to be electrically connected to the heating component;
a power supply component configured to output a power to the heating component;
an output detecting circuit configured to provide a first detection signal associated with a first resistance value between the first conductive component and the second conductive component; and
a controller electrically connected to the output detecting circuit and the power supply component, wherein
when determining that the first detection signal meets a first condition, the controller controls the power supply component to turn off the power to the heating component.

2. The vaporization device according to claim 1, wherein the first condition is that a value of the first detection signal is greater than a first voltage threshold.

3. The vaporization device according to claim 1, wherein the first condition is that the first detection signal indicates that the first resistance value is greater than a first impedance threshold.

4. The vaporization device according to claim 1, further comprising:
a sensor configured to detect an inhalation action and provide a sensing signal to the controller; and
a vibrator electrically connected to the controller, wherein
when the controller determines that a counter exceeds a first value, the

5. The vaporization device according to claim 1, further comprising a temperature detecting circuit configured to provide a first temperature detection signal associated with a temperature of the power supply component, wherein
when the controller determines that the first temperature detection signal meets a second condition, the controller controls the vaporization device to enter a standby state.

6. The vaporization device according to claim 5, wherein the second condition is that the first temperature detection signal is greater than a second voltage threshold.

7. The vaporization device according to claim 5, wherein the second condition is that the first temperature detection signal indicates that the temperature of the power supply component is greater than a first temperature threshold.

8. The vaporization device according to claim 1, further comprising:
a sensor configured to sense an inhalation action and provide a sensing signal to the controller; and
a charging circuit configured to be enabled by the controller to charge the power supply component, wherein
after the charging circuit is enabled, if the controller receives the sensing signal, the controller controls the charging circuit to stop charging the power supply component.

9. The vaporization device according to claim 8, wherein when the charging circuit is enabled, if the controller receives the sensing signal, the controller controls the power supply component to provide a power to the heating component.

10. The vaporization device according to claim 1, further comprising:
a sensor configured to detect an inhalation action to provide a sensing signal to the controller, wherein
the controller is configured to determine whether a value of first timer exceeds a first threshold, wherein
when the controller receives the sensing signal and the value of first timer exceeds the first threshold, the controller controls, within a first time period, the power supply component to provide a first power to the heating component, and controls, within a second time period, the power supply component to provide a second power to the heating component.

11. The vaporization device according to claim 10, wherein when the value of first timer does not exceed the first threshold, the controller controls, within a third time period, the power supply component to provide a third power to the heating component.

12. The vaporization device according to claim 1, further comprising:
a temperature detecting circuit configured to detect a temperature of the power supply component; and
a charging circuit configured to charge the power supply component, wherein
when the controller is configured to determine that the temperature of the power supply component is in a first temperature range, the controller controls the charging circuit to provide a first charging current to the power supply component; and
when the controller is configured to determine that the temperature of the power supply component is in a second temperature range, the controller controls the charging circuit to provide a second charging current to the power supply component.

13. The vaporization device according to claim 12, wherein when the controller is configured to determine that the temperature of the power supply component is in a third temperature range, the controller controls the charging circuit to stop charging the power supply component, wherein the third temperature range is different from the first temperature range and the second temperature range.

14. A vaporization device, comprising:
a heating component;
a heating line winding a part of the heating component;
a power supply component configured to output a power to the heating line;
an output detecting circuit configured to provide a first detection signal associated with a resistance value of the heating line; and
a controller electrically connected to the output detecting circuit and the power supply component, wherein
when determining that the first detection signal meets a first condition, the controller stops providing an enable signal to the output detecting circuit.

15. The vaporization device according to claim 15, wherein the first condition is that a value of the first detection signal is less than a first voltage threshold.

16. The vaporization device according to claim 15, wherein the first condition is that a value of the first detection signal indicates that an impedance of the heating line is less than a first impedance value.

17. The vaporization device according to claim 15, further comprising:
a sensor configured to detect an inhalation action and provide a sensing signal to the controller; and
a vibrator electrically connected to the controller, wherein
when determining that a number of inhalation actions exceeds a first value and duration of each of the inhalation actions exceeds a second value, the vibrator is enabled.

18. The vaporization device according to claim 15, further comprising a thermistor configured to detect a temperature of the power supply component, wherein
when determining that the temperature of the power supply component is less than a second temperature value, the controller controls the vaporization device to enter a standby state.

19. The vaporization device according to claim 15, further comprising:
a sensor configured to sense a sensing signal associated with a first airflow; and
a charge detecting circuit configured to provide a charge detection signal to the controller, wherein
the controller enables a charging circuit based on the charge detection signal, wherein
after the controller receives the charge detection signal, if the controller receives the sensing signal, the controller stops enabling the charging circuit.

20. The vaporization device according to claim 20, wherein after the controller receives the charge detection signal, if the controller receives the sensing signal, the controller controls the power supply component to provide a power to the heating line.
